(19) Europäisches Patentamt
European Patent Office
Office européen des brevets

(11) **EP 3 506 173 A1**

(12) **DEMANDE DE BREVET EUROPEEN**

(43) Date de publication:
**03.07.2019 Bulletin 2019/27**

(51) Int Cl.:
**G06N 3/04** *(2006.01)* **H04L 25/03** *(2006.01)*
**H04L 27/00** *(2006.01)* **H04L 27/233** *(2006.01)*

(21) Numéro de dépôt: **18306866.7**

(22) Date de dépôt: **28.12.2018**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **29.12.2017 FR 1701417**
**29.12.2017 FR 1701419**
**29.12.2017 FR 1701418**
**16.02.2018 FR 1800149**

(71) Demandeur: **Avantix**
**13794 Aix-en-Provence (FR)**

(72) Inventeur: **COURTAT, Thomas**
**75014 PARIS (FR)**

(74) Mandataire: **Debay, Yves**
**Cabinet Debay**
**126, Elysee 2**
**78170 La Celle Saint Cloud (FR)**

(54) **SYSTÈME DE DÉMODULATION AVEUGLE DE SIGNAUX DE TÉLÉCOMMUNICATION NUMÉRIQUE**

(57) La présente invention concerne un système de démodulation en aveugle d'un signal de télécommunication numérique modulé linéairement et comprenant des modules permettant l'estimation, le suivi des variations temporelles et la corrections de la valeur des phases, des amplitudes, des fréquences , des décalages temporels et d'un ensemble de filtres de compensation du canal de propagation, caractérisé en ce qu'il comprend au moins une architecture hardware ou hardware et firmware comportant des mémoires et une ou plusieurs unités de traitement pour implémenter un réseau de blocs de calcul spécifiques connectés les uns aux autres, dont
- un bloc de synchronisation du signal en aveugle permettant l'estimation, le suivi et la compensation du retard du signal et permettant aussi d'adapter le débit de traitement de la chaine en aval (du système de démodulation) à la cadence réduite d'un échantillon par symbole,
- un premier bloc réalise au moins un module permettant d'estimer au moins un des paramètres des signaux observés pour évaluer par la suite les autres paramètres des signaux observés par d'autres blocs de calcul du réseau,
- au moins un deuxième bloc de calcul spécialisé réalise un module de décision pour calculer un signal d'erreur et rétro-propager les erreurs calculées à chacun des blocs résiduels précédents.

**Figure 3**

EP 3 506 173 A1

**Description**

DOMAINE TECHNIQUE DE L'INVENTION

La présente invention concerne généralement un système de traitement de signaux en télécommunications numériques, et notamment un système de démodulation éventuellement en aveugle et en temps réel de signaux de télécommunication modulés linéairement, mono-polarisés, ou bipolarisés, transmis sur un canal perturbé et robuste à diverses déficiences de la chaine de transmission (synchronisation, dérive en fréquence, bruit de phase...).

ARRIERE-PLAN TECHNOLOGIQUE DE L'INVENTION

Dans le domaine de la télécommunication numérique, une démodulation d'un signal est réalisée par un appareil de démodulation pour reconstituer un signal dit en bande de base à partir de l'observation d'un signal modulé et éventuellement perturbé par les imperfections de la chaine de transmission et d'un canal de propagation. La démodulation en aveugle, plus particulièrement, vise la démodulation d'un signal sans utilisation de séquences pilotes connues a priori.
La démodulation aveugle d'un signal de télécommunication numérique en modulation linéaire peut être réalisée selon deux types de signaux :

- les signaux dits « mono-voies » ou « mono-polarisés » qui sont des signaux classiques dans lesquels un flux d'information est transmis sur le support ; et
- les signaux « multi-voies » ou « bipolarisés et/ou multipolarisés » ou XPIC (sigle faisant référence à la technique de démodulation « cross-polarization interference canceller » ou annuleur d'interférences de polarisation croisée) qui sont constitués de deux signaux multiplexés sur les deux polarisations de l'onde électromagnétique.

Une fonction d'égalisation du signal est conçue pour pouvoir inverser au mieux les canaux et compenser les imperfections de transmission. Une telle fonction nécessite la connaissance de nombreux paramètres ou caractéristiques (fréquence, amplitude, filtres d'égalisation...) du signal modulé linéairement. Dans un mode de transmission coopératif ou « non-aveugle », des séquences connues de l'émetteur et du récepteur sont émises régulièrement et permettent de régler l'égaliseur. Or dans un contexte de transmission en aveugle, aucune séquence n'est connue et une fonction d'égalisation est difficile à trouver.
Les documents (S. Barembruch, « Méthodes approchées de maximum de vraisemblances pour la classification et identification aveugles en communications numériques », rapport de thèse, Telecom ParisTech, 7 mars 2011) et (E. Punskaya, « Sequential Monte Carlo methods for digital communications », rapport de thèse, université de Cambridge, 2003) présentent deux méthodes proches fondées sur l'algorithme EM (pour « Expectation Maximization ») permettant de démoduler en aveugle des signaux de télécommunication. Cependant ces approches quoique de complexité réduite ne permettent pas de traiter des signaux de grand débit en temps réel, elles sont focalisées sur la compensation du canal de propagation et ne permettent pas de compenser les autres distorsions du signal (synchronisation, phase, dérive de porteuse...). Elles ne permettent pas de suivre les variations temporelles des paramètres. Elles ne permettent pas non plus de traiter des signaux sur plusieurs polarisations.
Un des buts du brevet FR3030964 est de proposer des méthodes permettant de séparer et de démoduler en aveugle deux signaux de télécommunication modulés linéairement, sur une seule voie et superposés en fréquence en utilisant un algorithme d'espérance maximisation et des techniques de filtrage particulaire. Si cette méthode permet de suivre les variations temporelles des paramètres, elle est encore trop demandeuse en temps de calcul pour pouvoir suivre un signal de grand débit en temps réel et pour de grands ordres de modulation.

DESCRIPTION GENERALE DE L'INVENTION

La présente invention a pour but de pallier certains inconvénients de l'art antérieur en proposant un système permettant d'optimiser et de faciliter la démodulation, éventuellement en aveugle, de signaux de télécommunication mono-polarisés ou bipolarisés et permettant une implémentation en temps réel.
A cet effet, la présente invention concerne un système de démodulation en aveugle d'un signal de télécommunication numérique modulé linéairement et comprenant des modules permettant l'estimation, le suivi des variations temporelles et la corrections de la valeur des phases, des amplitudes, des fréquences , des décalages temporels et d'un ensemble de filtres de compensation du canal de propagation, caractérisé en ce qu'il comprend au moins une architecture hardware ou hardware et firmware comportant des mémoires et une ou plusieurs unités de traitement pour implémenter un réseau de blocs de calcul spécifiques connectés les uns aux autres, dont

- un bloc de synchronisation du signal en aveugle permettant l'estimation, le suivi et la compensation du retard du signal et permettant aussi d'adapter le débit de traitement de la chaine en aval (du système de démodulation) à la cadence réduite d'un échantillon par symbole,

- un premier bloc réalise au moins un module permettant d'estimer au moins un des paramètres des signaux observés pour évaluer par la suite les autres paramètres des signaux observés par d'autres blocs de calcul du réseau,
- au moins un deuxième bloc de calcul spécialisé réalise un module de décision pour calculer un signal d'erreur et rétro-propager les erreurs calculées à chacun des blocs résiduels (« propagate », « update ») précédents.

Selon une autre particularité, le paramètre du premier bloc est le taux d'amplification, et le système comporte un bloc additionnel spécialisé relié aux sorties du premier et aux entrées du bloc de décision, ce bloc additionnel réalisant au moins un module d'estimation de fréquence pour déterminer les fréquences des signaux émis en aveugle et/ou au moins un module de phase pour déterminer les valeurs de phase desdits signaux.

Selon une autre particularité, le module de phase peut être disposé dans un bloc de calcul supplémentaire relié aux sorties du bloc de calcul de fréquence du bloc additionnel.

Selon une autre particularité, le système comprend un bloc supplémentaire spécialisé du réseau entre le bloc de synchronisation et le premier bloc de calcul, ledit bloc supplémentaire réalise l'estimation d'au moins un filtre permettant de corriger tout ou partie de la distorsion induite par le canal de propagation.

Selon une autre particularité, le module du bloc de synchronisation, est configuré pour recevoir en entrée un flux de signal complexe échantillonné à au moins deux échantillons par symboles et stocker ces échantillons dans un tampon mémoire interne pour délivrer à chaque temps symbole une sortie de signal d'entrée au bloc aval du réseau (par exemple, le second bloc, le premier bloc ou le bloc supplémentaire).

Selon une autre particularité, au moins un module de filtre (F ou G) du bloc supplémentaire est initialisé par les opérations d'initialisation suivantes :

- $F$ = vecteur complexe de taille $N_F$
- $X$ = FIFO complexe de taille $N_F$

dans lesquelles les paramètres d'initialisation, mémorisé dans une mémoire du module de filtre, sont:

- $N_F$ est un entier
- $\mu$ un vecteur de réels de taille $N_F$.

Selon une autre particularité, au moins un module d'amplification du premier bloc est initialisé par les opérations d'initialisation suivantes :

- $a = a_\square$

- $X$ = FIFO complexe de taille $\square N_\square$

- $\mu = \mu_\square$

dans lesquelles les paramètres d'initialisation, mémorisé dans une mémoire du module du premier bloc, sont :

- _a_ est une valeur initiale d'amplification
- _N_ est un entier
- _$\mu$_ est un nombre réel.

Selon une autre particularité, le module d'estimation de la fréquence du bloc additionnel (au premier bloc) est initialisé par les opérations d'initialisation suivantes :

- $f = f_\square$

- $\eta = e^{2\pi j f}$

- $\rho = 1.0$

- $X$ = FIFO complexe de taille $\square N_\square$

- $\mu = \mu_\square$

dans lesquelles les paramètres d'initialisation, mémorisé dans une mémoire du module du bloc additionnel (au premier bloc), sont :

- ◦ _f_ est un nombre réel codant une estimation initiale de la fréquence
- ◦ _N_ est un entier
- ◦ _µ_ est un nombre réel.

Selon une autre particularité, le module d'estimation de la valeur phase du bloc additionnel est initialisé par les opérations d'initialisation suivantes :

- $\varphi = \varphi_\square$

- $\rho = e^{2\pi j \varphi}$

- $\mu = \mu_\square$

dans lesquelles les paramètres d'initialisation, mémorisé dans une mémoire du module du bloc additionnel (au premier bloc), sont :

- ◦ $^\square \varphi_\square$ est un réél

- ◦ $^\square N_\square$ est un entier

- ◦ $X$ = FIFO complexe de taille $^\square N_\square$

- ◦ $^\square \mu_\square$ est un nombre réel.

Selon une autre particularité, à l'initialisation du système des paramètres notés $\theta_i$ sont fournis par défaut par une mémoire du système, permettant dans les premiers instants, appelés phase de convergence, la convergence des $\theta_i$ vers les valeurs pertinentes ; puis lorsque le système atteint un voisinage défini des paramètres $\theta_i$, le système entre (implicitement) en phase dite de production ou de suivi, les sorties du système démodulateur sont alors fiables et applicables à un appareil d'utilisation ou à d'autres éléments matériels hardware ou software ou firmware permettant de finaliser la démodulation.

Selon une autre particularité, des blocs de traitement (H-N1 ; V-N1) d'au moins une des deux voies reçoit chacun des deux signaux d'entrée synchronisés $\left( x_1^{(h)} \; ; \; x_1^{(v)} \right)$ issus du bloc de synchronisation (par exemple, représentant respectivement un échantillonnage de chaque voie, pour générer les signaux de sortie $x_1^{(h)}$ et $x_1^{(v)}$), les signaux $x_3^{(h)}$ et $x_3^{(v)}$ étant représentatifs d'une correction appliquée à chaque signal $x_0$ par les signaux de sortie respectifs $x_2^{(h)}$ et $x_2^{(v)}$, de chacun des filtres G de chaque voie, émulés chacun par un bloc de traitement (H-N2 ; V-N2), les signaux $x_3^{(h)}$ et $x_3^{(v)}$ sont envoyés sur les cascades en série des blocs de traitement (H-N4 ; V-N4), (H-N5 ; V-N5) et (H-N6 ; V-N6) de chaque voie, émulant chacun le signal indiquant l'amplification de la voie (ampli), pour le bloc (H-N4 ; V-N4), respectivement la fréquence (fq) de la voie pour le bloc (H-N5 ; V-N5) et respectivement la phase (φ) de la voie pour le bloc (H-N6 ; V-N6).

Selon une autre particularité, chaque sortie respective $y^h$, $y^v$ de chaque bloc de traitement (H-N6 ; V-N6) émulant la correction de phase de chaque voie H et V, est envoyée sur chaque bloc de décision (H-NL ; V-NL) de chaque voie et sur chacune des entrées respectives du circuit de rétro-propagation d'au moins deux erreurs ($e^h$ et $e^v$) à travers les blocs « miroirs » qui permettent le calcul à la volée des incréments des différents paramètres des blocs de la chaine le système comprenant plusieurs modules de traitements d'une pluralité d'observation de chaque signal d'entrée ($x_i$), chacun associé à un bloc miroir ou résiduel « Update » pour chaque paramètre phase, fréquence, ampli et un bloc miroir ou résiduel « Propagate » correspondant pour chaque paramètre phase, fréquence et amplification.

Selon une autre particularité, la sortie $Z^h$, $Z^v$ de chaque bloc décision, est également envoyée à une paire de multiplieur, recevant respectivement, l'un du bloc phase et l'autre du bloc fréquence fq (par exemple, des facteurs correctifs représentant la fréquence instantanée). La sortie du dernier multiplieur de chaque voie est envoyée sur chacun des filtres G de chaque voie, émulés chacun par un bloc de traitement de chaque voie.

Selon une variante l'invention concerne une méthode temps réel de démodulation aveugle de signaux de télécommunication numérique, à partir de l'observation d'une version échantillonnée de ce signal.

La méthode appliquée dans un certain schéma permet notamment de démoduler un signal mono-voie de modulation linéaire en compensant : l'amplification du signal, sa phase, son résidu de porteuse, les effets du canal de propagation.

La méthode appliquée selon un autre schéma permet notamment de démoduler un signal bi-voies et de séparer ses deux composantes en compensant : l'amplification des signaux, leurs phases, les résidus de porteuses, les effets du canal de propagation et les effets du co-canal de propagation (fuite d'une polarisation sur l'autre et inversement lors de la propagation du signal).

La méthode décrite ici peut être considérée en toute généralité une suite de blocs MIMO (multi inputs, multi outputs) appelés « neurones spécialisés », chaque bloc (i) réalisant un traitement élémentaire paramétré par un ensemble $\theta_i$. Si tous les $\theta_i$ de la chaine sont bien réglés, la chaine procède à la démodulation effective du signal. Si les $\theta_i$ ne sont pas connus, la chaine permet d'apprendre en ligne les valeurs pertinentes pour chaque $\theta_i$. A l'initialisation du système des $\theta_i$ sont fournis par défaut par une mémoire. Dans les premiers instants, le système permet la convergence des $\theta_i$ vers les valeurs pertinentes ; cette phase est appelée phase de convergence ; le signal démodulé produit en sortie n'est alors pas fiable. Quand le système atteint un voisinage des paramètres $\theta_i$, on entre en phase dite de production ou de suivi. Les sorties du démodulateur sont alors fiables et utilisables.

Les sorties du démodulateur sont alors fiables et conjointement à la démodulation du signal, le système poursuit la variation des paramètres du système. Le système ne bascule pas explicitement d'un mode à l'autre, la seconde phase se place dans la continuité de la première.

La méthode de l'invention peut comprendre les étapes suivantes :

- acquisition par un échantillonnage d'une première pluralité du signal pour constituer chacune une entrée d'un réseau de L blocs de traitement aussi appelés ici « neurones spécialisés » ou simplement « neurones », chaque neurone étant simulé par les sorties du bloc précédent, la première pluralité du signal étant soumise en entrée au premier bloc simulant un premier neurone du réseau pour générer une pluralité de sorties du premier bloc; chaque neurone $F_i$ étant simulé par les sorties d'une chaine amont $G_i$ et stimulant une chaine aval $H_i$ ; chaque jeu d'échantillons parcourt la même chaine de traitement ;
- les sorties des derniers blocs du réseau correspondent idéalement aux symboles démodulés ;
- ajout d'une non linéarité à chacune des sorties du dernier bloc du réseau permettant de calculer un signal d'erreur et propagation de cette erreur dans le sens inverse de la chaine de traitement (« retropropagation ») ;
- estimation à réception par chaque neurone (i) de l'erreur d'un terme correctif $\delta\theta_i$ et mise à jour dans chaque bloc de la valeur du paramètre $\theta_i$ selon $\theta_i += \delta\theta_i$.

Selon une autre particularité, chaque neurone du réseau réalise spécifiquement :

- un traitement d'une fonction « Next », implémentée et mise en oeuvre dans un sous bloc logique de traitement $\left(F_i^{(N)}\right)$, pour générer des sorties à partir d'une pluralité d'observation du signal et les transmettre au bloc de traitement du neurone suivant du réseau ; cette fonction s'écrit de façon générale sous la forme $(X_{i+1,0},\cdots,X_{i+1,m_{i+1}-1}) = \text{next}(X_{i,0},\cdots,X_{i,m_i-1})$ avec $m_i$ le nombre d'entrées et $m_{i+1}$ le nombre de sortie de $F_i^{(N)}$ qui correspond au nombre d'entrées de $F_{i+1}^{(N)}$ ;
- un traitement d'une fonction « Propagate », implémentée et mise en oeuvre dans un sous bloc logique « Propagate » $\left(F_i^{(P)}\right)$ pour calculer les erreurs $(e_{i+1,0},\cdots,e_{i+1,m_{i+1}-1})$ fournies par le bloc $F_{i+1}^{(P)}$ ou par $(e_{L-1,0},\cdots,e_{L-1,N-1}) = (e_0,\cdots,e_{N-1})$ avec $e_j = \overline{z_j - y_j}$ en bout de chaine soit à l'entrée $F_{L-1}^{(P)}$ ; pour le i-ème neurone, cette fonction s'écrit de façon générale sous la forme $(e_{i,0},\cdots,e_{i,m_i-1})=\text{propagate}(e_{i+1,0},\cdots,e_{i+1,m_{i+1}-1})$

- un traitement d'une fonction « Update » , implémentée et mise en oeuvre dans un sous bloc logique « Update » $\left(F_i^{(U)}\right)$, pour calculer les paramètres correctif $\delta\theta_i$ à appliquer à la valeur courante du paramètre mémorisé en interne $\theta_i$ à partir des erreurs $(e_{i+1,0},\cdots,e_{i+1,m_{i+1}-1})$ renvoyées par le sous bloc $F_{i+1}^{(P)}$; cette fonction s'écrit de façon générale sous la forme $\delta\theta_i=\text{update}(e_{i+1,0},\cdots,e_{i+1,m_{i+1}-1})$.

Selon une autre particularité, chaque neurone comprend au moins une implémentation et une mise en oeuvre d'une suite de traitements élémentaires de la forme :

- le sous bloc $F_i^{(N)}$ réalise

$$\left(X_{i+1,0},\cdots,X_{i+1,m_{i+1}-1}\right) = \text{next}\left(X_{i,0},\cdots,X_{i,m_i-1}\right), X_{ij} \in K^{q_{ij}}$$

avec $q_{ij}$ un entier et $K$ l'espace des nombres réels ou l'espace des nombres complexes

- le sous bloc $F_i^{(P)}$ réalise $\left(e_{i,0},\cdots,e_{i,m_i-1}\right) = \text{propagate}\left(e_{i+1,0},\cdots,e_{i+1,m_{i+1}-1}\right)$

- le sous bloc $F_i^{(U)}$ réalise $\delta\theta_i = \text{update}\left(e_{i+1,0},\cdots,e_{i+1,m_{i+1}-1}\right)$

Selon une autre particularité, l'ajout de la non-linéarité à la sortie du dernier bloc $\left(H_i^{(N)}\right)$ du réseau est mise en oeuvre par la fonction :
$z_j = \text{NL}(y_i)$ dans laquelle

- $z_j$ est le signal sortant d'un organe de décision du dernier bloc
- $y_j$ est un échantillon égalisé ou démodulé
- le bloc de décision étant défini par la comparaison du résultat obtenu par la sortie y du bloc phase avec une constellation finie de résultats possibles mémorisés par le bloc de décision, et décidant de prendre parmi les résultats possibles, celui dont la distance avec le point représentatif de la sortie y est la plus petite

Selon une autre particularité, la rétropropagation des erreurs calculées est obtenue par les traitements, implémentés et mise en oeuvre par un algorithme de rétropropagation de l'erreur, suivants :

- Initialisation de la rétropropagation sous la forme
pour $0 \leq k < N, e_{L,k} = \overline{z_k \text{-} y_k}$

- Propagation de l'erreur par le sous-neurone $F_i^{(P)}$ dans la fonction $(e_{i,0},\cdots,e_{i,m_i-1})=\text{propagate}(e_{i+1,0},\cdots,e_{i+1,m_{i+1}-1})$ selon les calculs

$$e_{i,j} = \sum_k e_{i+1,k} \cdot \frac{\partial F_{i,k}}{\partial x_{i,j}}$$

  ∘ $\forall 0 \leq j < m_i$,

Selon une autre particularité, la mise à jour des paramètres internes $\theta_i$ de chaque neurone $F_i$ est obtenue dans le sous neurone $F_i^{(U)}$ par les traitements, implémentés et mise en oeuvre dans la fonction $\delta\theta_i = \text{update}(e_{i+1,0},\cdots,e_{i+1,m_{i+1}-1})$ selon :

∘ Calcul de $\Delta_i$ :

$$D_{i,j} = e_{i+1,j} \cdot \frac{\partial F_{i,j}^{(X)}}{\partial \theta_i}$$

▪ Pour $0 \le j < M_{i+1}$,

$$\Delta_i = \sum_j D_{i,j}$$

▪

∘ Mise à jour *de* $\theta_i$ :

▪ $\theta_i += 2\mu\Re(\Delta_i)$ si $\theta_i$ est dansun **R** espace vectoriel

▪ $\theta_i += 2\mu\Delta_i$ si $\theta_i$ est dans un **C** espace vecoriel

Avec - $\mu_i$ un paramètre réel appelé « vitesse d'apprentissage »

- $\delta\theta_i$ est le paramètre correctif du paramètre $\theta_i$
- $D_{ij}$ est une quantité intermédiaire de calculs auxiliaires pouvant être mémorisées temporairement.

Selon une autre particularité, au fil du traitement des échantillons en entrée du système par les différents sous-blocs, les valeurs des différents $\theta_i$ initialisées de façon arbitraire, convergent vers des valeurs rendant la démodulation effective.

Selon une autre particularité, le réseau de neurones spécialisé constitue une suite compatible de blocs de type MIMO (« multi inputs, multi outputs »).

Selon une autre particularité, la méthode comprend en outre le stockage par au moins un tampon mémoire de la pluralité d'entrées et dans au moins un autre tampon de la pluralité de sorties de chaque neurone spécialisé du réseau.

Selon une autre particularité, à l'initialisation du système informatique constituant un démodulateur des $\theta_i$ sont fournis par défaut par une mémoire du système, dans les premiers instants de la mise en oeuvre de la méthode, le système permet la convergence des $\theta_i$ vers des valeurs pertinentes.

Un autre but est de remédier à un ou plusieurs inconvénients de l'art antérieur concernant la mise en oeuvre ou l'implémentation d'une méthode de démodulation en aveugle des signaux de télécommunication numérique, dans un matériel informatique ou électronique. La méthode permet la séparation des composantes d'un signal bi-voies reçu après mélange.

Ce but est atteint par un produit programme d'ordinateur implémenté sur un support mémoire, susceptible d'être mis en oeuvre au sein d'une unité de traitement informatique, soit par un hardware ou une combinaison hardware et firmware, et comprenant des instructions pour la mise en oeuvre d'une méthode selon l'une quelconque des revendications précédentes.

Un autre but est de remédier à un ou plusieurs inconvénients de l'art antérieur concernant l'application d'une méthode de démodulation en aveugle des signaux de télécommunication numérique en modulation linéaire.

Ce but est atteint par une utilisation dans un système de démodulation en aveugle d'un signal de télécommunication, le système comprenant au moins un réseau de neurones spécialisés chacun définissant respectivement un filtrage par un premier neurone spécialisé, un gain d'amplification par un second neurone spécialisé, une correction de la fréquence du signal par un troisième neurone spécialisé et la correction de la valeur de phase du signal par un quatrième neurone spécialisé ; caractérisé en ce que la méthode selon l'une quelconque des revendications précédentes est mise en oeuvre pour déterminer les paramètres (ou caractéristiques) du signal émis en aveugle. Si ces caractéristiques ne sont pas des constantes fixes du signal d'intérêt mais des processus variant au cours du temps, le système procède au suivi des variations de ces paramètres.

D'autres particularités et avantage de la présente invention sont détaillés dans la description qui suit.

DESCRIPTION DES FIGURES ILLUSTRATIVES

D'autres particularités et avantages de la présente invention apparaîtront plus clairement à la lecture de la description ci-après, faite en référence aux dessins annexés, dans lesquels :

- la figure 1 représente schématiquement l'intégration d'un « neurone spécialisé » $F_i$ à une chaine de neurones amont ($G_i$) et à une chaine de neurones aval ($H_i$) d'une méthode temps réel de démodulation aveugle de signaux de télécommunication numérique, à mettre en oeuvre dans au moins un mode de réalisation de l'invention ;
- la figure 2 représente schématiquement de façon plus détaillée les traitements réalisés par le neurone spécialisé nommé du réseau, selon un mode de réalisation de l'invention ;

- la figure 3 représente schématiquement une chaine de traitement d'un démodulateur aveugle de type mono-voie, selon un mode de réalisation de l'invention ;
- les figures 4 et 5 représentent schématiquement une chaine de traitement d'un démodulateur aveugle de type bi-voies (comportant deux voies), permettant respectivement, la génération et la transmission au bloc suivant d'une pluralité de sorties du bloc précédent et la rétro-propagation des erreurs calculées représentée à la figure 5.

Sur les différentes figures, les mêmes références peuvent désigner des éléments identiques ou similaires.

DESCRIPTION DES MODES DE REALISATION PREFERES DE L'INVENTION

Dans la suite, on notera que chaque module ou sous module ou bloc (ou dit autrement bloc de traitement ou de calcul) du système de démodulation comprend au moins une machine informatique (ou électronique) et un logiciel ou code exécutable par la machine pour définir un ou plusieurs paramètre(s) obtenu(s) en calculant une ou plusieurs fonction(s) analytique(s) spécifique(s) à un module ou sous module ou bloc. Ainsi, le traitement d'une ou plusieurs fonction(s) peut être implémenté et mis en oeuvre par chaque module ou sous module ou bloc. Par implémenté et mise en oeuvre, on entend soit l'exécution d'un programme correspondant aux fonctions ou formules mathématiques (explicitées dans le texte), par un matériel informatique (tel qu'un microprocesseur et une mémoire) ; soit par un hardware ou une combinaison hardware et firmware.

D'autre part, l'homme du métier pourra éventuellement s'aider des trois autres demandes (avec comme numéros de dépôt FR1701417, FR1701418 et FR1701419) déposées sous priorité interne à la présente demande, par la présente demanderesse afin d'apprécier des éventuelles caractéristiques fonctionnelles et/ou structurelles qui ne seraient pas, ou insuffisamment, détaillées dans la présente demande. En d'autres termes, l'intégralité des trois autres demandes (description, revendications et dessins) est, le cas échéant (selon la loi en vigueur), incorporée à la présente demande par renvoi.

La présente invention concerne un système de démodulation ou de recherche en aveugle de signaux de télécommunication, à partir de l'observation par échantillonnage d'un signal, ce signal correspond à la réception d'un signal de modulation linéaire ayant subi des déformations lors de sa transmission. Les traitements du démodulateur sont paramétrés notamment par : des coefficients d'égalisation, une valeur de correction de la phase ($\varphi$), de l'amplitude du signal (Ampli ou A), de l'effet de la fréquence ($f$) et du décalage temporel du signal ($\tau$).

Dans certains modes de réalisation, le système de démodulation en aveugle de la présente invention comprend au moins un bloc de traitement spécifiques permettant la correction des différents éléments perturbateurs d'une chaine de transmission numérique, telle que la correction de l'erreur de synchronisation, la correction du canal de propagation et du canal équivalent induit par les imperfections des cartes d'acquisition ou des composants électroniques, la correction de l'amplification du signal, la correction de l'erreur de phase, de la dérive en fréquence, du bruit de phase et des instabilités en fréquence des oscillateurs mis en jeu. Dans le cas bipolarisé, la présente invention peut permettre en outre de compenser les fuites de signal d'une voie à l'autre.

Dans certains modes de réalisation, le système de démodulation en aveugle comprend au moins une architecture hardware ou hardware et firmware comportant des mémoires et une ou plusieurs unités de traitement pour implémenter un réseau de blocs de calcul spécifiques connectés les uns aux autres, dont

- un bloc de synchronisation du signal en aveugle permettant l'estimation, le suivi et la compensation du retard du signal et permettant aussi d'adapter le débit de traitement de la chaine en aval (du système de démodulation) à la cadence réduite d'un échantillon par symbole,
- un premier bloc réalise au moins un module permettant d'estimer des paramètres des signaux observés pour évaluer par la suite les autres paramètres des signaux observés par d'autres blocs de calcul du réseau,
- au moins un deuxième bloc de calcul spécialisé réalise un module de décision pour calculer un signal d'erreur et rétro-propager les erreurs calculées à chacun des blocs résiduels (« propagate », « update ») précédents.

Dans certains modes de réalisation, le premier bloc et/ou les blocs additionnels du premier bloc (par exemple le module d'amplification, le module de fréquence et/ou le module de la valeur phase) et le(s) bloc(s) supplémentaire(s) (par exemple le module filtre F et/ou G) du système peuvent être agencé selon une configuration, dans laquelle les blocs sont noté de façon générique par M-i avec i une valeur d'indexation contenant un certain nombre d'états internes (pouvant être des valeurs scalaires ou vectorielles, entières, réelles ou complexes) dont notamment un paramètre $\theta_i$ (pouvant être un vecteur de paramètres réelles ou complexes) paramétrant les traitements réalisés par le module dudit bloc. Le module M-i peut se décomposer en au moins trois sous-modules :

- N-i qui encapsule (ou implémente) une fonction « next »,

- P-i qui encapsule (ou implémente) une fonction « propagate » et

- U-i qui encapsule (ou implémente) la fonction update.

Le regroupement des sous-modules P-i et U-i est noté B-i.

En interne, la fonction update() calcule la valeur d'un incrément $\delta\theta_i$ à appliquer à la valeur courante du vecteur de paramètres interne $\theta_i$ selon $\theta_i = \theta_i + \delta\theta_i$.

Les valeurs en entrée du sous-module N-i sont les valeurs $x_{i-1}$ produites par le module N-(i-1). Les valeurs en entrée du sous-module B-i sont les valeurs $e_i$ produites par le module B-(i+1).

Le sous-module N-i produit la valeur $x_i$ et le sous-module P-i la valeur $e_{i-1}$

On notera que les entrées $x_{i-1}$ et $e_i$ peuvent être des nombres rééls ou complexe ou des vecteurs réels ou complexes. Ils peuvent être le résultat du multiplexage des résultats de plusieurs sous-modules.

Dans certains modes de réalisation, le module du bloc de synchronisation, est configuré pour recevoir en entrée un flux de signal complexe échantillonné à au moins deux échantillons par symboles et stocker ces échantillons dans un tampon mémoire interne pour délivrer à chaque temps symbole une sortie de signal d'entrée au premier bloc du réseau. Dans certains modes de réalisation, Le module du bloc de la synchronisation implémente une fonction « next » de la forme y = next(), dans lequel les valeurs d'entrée nécessaires à la réalisation de la fonction peuvent être déportées dans au moins buffer ou tampon mémoire interne. De plus ce module étant placé en début de chaine de traitement du système, une définition et une implémentation d'une fonction « propagate » ne peut être pas nécessaire.

Dans certains modes de réalisation, le module « décision » du deuxième bloc n'implémente pas les fonctions Propagate et Update.

Dans certains modes de réalisation, le système est cadencé au rythme symbole.

Dans certains modes de réalisation, pour chaque symbole de signal, une suite de fonctions next() encapsulées (ou intégrées) dans les différents modules sont successivement appliquées à la sortie du synchroniseur (ou bloc de synchronisation du signal en aveugle) pour produire en bout de chaine de traitement du système une sortie y.

Dans certains modes de réalisation, à la sortie y est appliquée une fonction de décision (par exemple par le second bloc du système). Dans un contexte aveugle, à modulation connue, cette fonction de décision peut être par exemple un slicer, qui à un nombre complexe associer le symbole de la modulation le plus proche. Dans un contexte coopératif, la fonction de décision renvoie la valeur connue a priori du symbole. Dans certains modes de réalisation, on peut envisager un contexte mixte pour un signal multiplexant des symboles pilotes connus et des symboles de donnés inconnus.

A cette architecture de base du système de démodulation, peut être ajoutée une boucle de rétroaction contenant un filtre supplémentaire (noté G). Cet ajout permet une plus grande robustesse de la démodulation au canal de propagation. Dans certains modes de réalisation, le système de démodulation peut ne pas comprendre de module filtre (F et/ou G) du bloc supplémentaire, notamment pour des signaux obtenus par les fibres optiques ou satellitaires, puisqu'il n'y a pas (ou peu) d'échos ou bruit de signal.

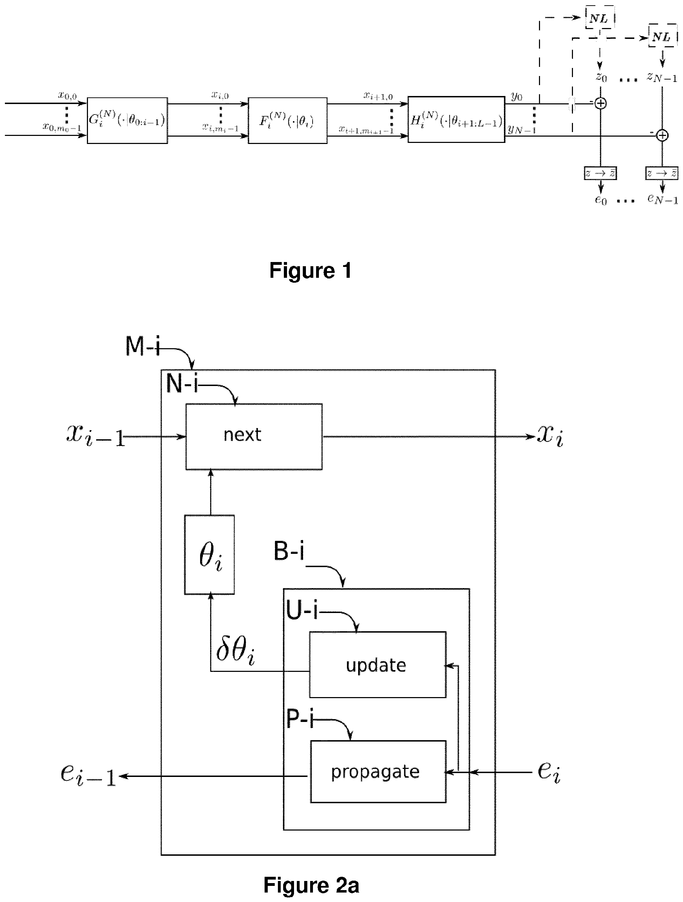

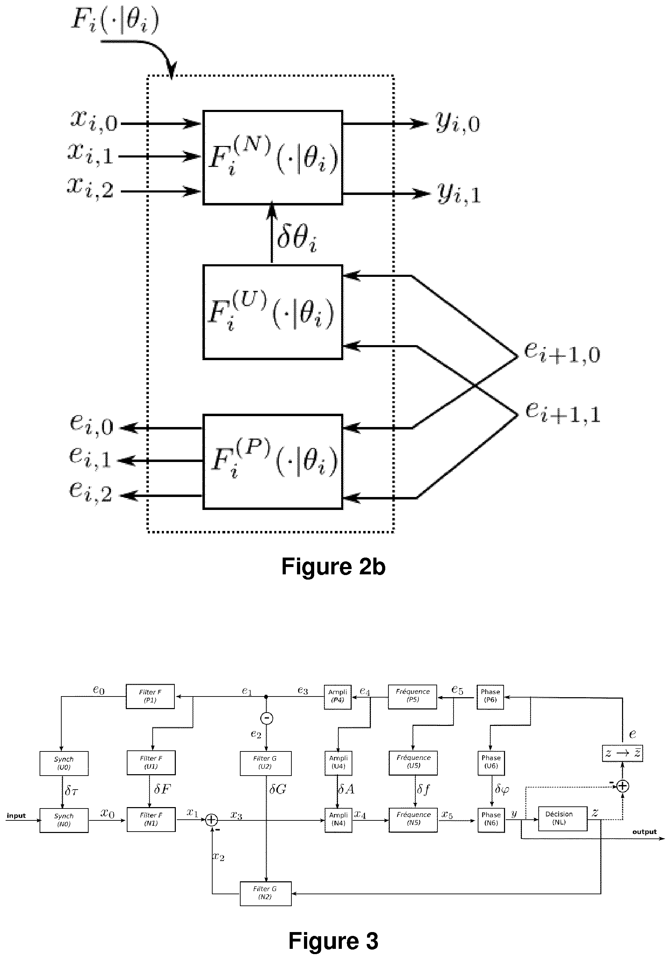

La sortie du module de décision (ou slicer) peut être notée z. La quantité erreur e peut être définie par la formule: $e = \overline{z-y}$. Elle peut constituer le début de la chaine de rétroaction. L'erreur $e$ parcourt la chaine de traitement en sens inverse, comme représenté par exemple sur les figures 2, 3 et 5. Dans chaque sous module P-i, la fonction propagate( ) modifie l'erreur reçue du module précédant (dans le sens inverse de la chaine) avant d'envoyer cette erreur au module suivant (dans le sens inverse de la chaine). L'erreur reçue par un module est par ailleurs utilisée en entrée de la fonction update( ) dans le sous-module U-i qui procède à la mise à jour des paramètres du module de traitement M_i.

Le système peut être implémenté par un logiciel sur un dispositif de calcul ou par un système électronique. Les différents modules de traitement M_i peuvent être pipelinés.

Dans la suite, un tampon mémoire FIFO peut être considéré comme un vecteur. Ainsi, dans certains modes de réalisation, les termes du vecteur peuvent aller du plus ancien (premier indice du vecteur) au plus récent (dernier indice du vecteur) élément du tampon FIFO.

Ainsi, la notation $\langle a|b \rangle$ entre deux vecteurs réels ou complexes de même taille désigne la somme du produit de leurs éléments : $\langle a|b \rangle = \sum a_i b_i$.

Dans certains modes de réalisation, chaque bloc de calcul du réseau comprend une fonction d'initialisation, pouvant être implémentée par au moins un processeur et au moins un logiciel ou un code exécutable, pour initialiser les paramètres du module de chaque bloc de calcul du réseau (par exemple : module d'amplification, module de fréquence, module de la valeur phase, etc.).

Dans certains modes de réalisation, au moins un module de filtre (F ou G) du bloc supplémentaire est initialisé par les opérations d'initialisation suivantes :

- $F$ = vecteur complexe de taille $N_F$
- $X$ = FIFO complexe de taille $N_F$

dans lesquelles les paramètres d'initialisation, mémorisé dans une mémoire du module de filtre, sont:

- ◦ $N_F$ est un entier
- ◦ $\mu$ un vecteur de réels de taille $N_F$.

Dans certains modes de réalisation, au moins un module d'amplification du premier bloc est initialisé par les opérations d'initialisation suivantes :

- $a = a_\square$
- $X$ = FIFO complexe de taille $^\square N_\square$
- $\mu = \mu_\square$

dans lesquelles les paramètres d'initialisation, mémorisé dans une mémoire du module du premier bloc, sont :

- ◦ _a_ est une valeur initiale d'amplification
- ◦ N est un entier
- ◦ _μ_ est un nombre réel.

Dans certains modes de réalisation, le module d'estimation de la fréquence du bloc additionnel (au premier bloc) est initialisé par les opérations d'initialisation suivantes :

- $f = f_\square$
- $\eta = e^{2\pi j f}$
- $\rho = 1.0$
- $X$ = FIFO complexe de taille $^\square N_\square$
- $\mu = \mu_\square$

dans lesquelles les paramètres d'initialisation, mémorisé dans une mémoire du module du bloc additionnel (au premier bloc), sont :

- ◦ _f_ est un nombre réel codant une estimation initiale de la fréquence
- ◦ N est un entier
- ◦ _μ_ est un nombre réel.

Dans certains modes de réalisation, le module d'estimation de la valeur phase du bloc additionnel (au premier bloc) est initialisé par les opérations d'initialisation suivantes :

- $\varphi = {}_{\varphi\square}$
- $\rho = e^{2\pi j \varphi}$
- $\mu = \mu_\square$

dans lesquelles les paramètres d'initialisation, mémorisé dans une mémoire du module du bloc additionnel (au premier bloc), sont :

- ◦ $^\square \varphi_\square$ est un réél
- ◦ $^\square N_\square$ est un entier
- ◦ $X$ = FIFO complexe de taille $^\square N_\square$
- ◦ $^\square \mu_\square$ est un nombre réel.

La présente invention présente l'avantage de définir des blocs de traitement spécifiques permettant la correction des différents éléments perturbateurs d'une chaine de transmission numérique, telle que la correction de l'erreur de synchronisation, la correction du canal de propagation et du canal équivalent induit par les imperfections des cartes d'acquisition ou des composants électroniques, la correction de l'amplification du signal, correction de l'erreur de phase, de la dérive en fréquence, du bruit de phase et des instabilités en fréquence des oscillateurs mis en jeu. Dans le cas « bi-voies », l'invention permet en outre de compenser les fuites de signal d'une voie à l'autre induite, par exemple par un mauvais alignement entre les antennes d'émission et de réception. De plus, la présente invention peut permettre d'identifier les paramètres de correction optimaux et de poursuivre leur variation dans le temps. Les différentes corrections appliquées par les différents modules de la présente permettent également, une stabilité renforcée par rapport à des boucles d'asservissement utilisées généralement dans des systèmes de démodulation aveugle.

Par ailleurs, la présente invention peut permettre de traiter dans le même système la démodulation de signaux en aveugle et la démodulation de signaux en mode coopératif.

La présente invention présente également une bonne robustesse au bruit de phase dans le montage « mono voie ». Elle présente l'avantage d'être robuste au bruit de phase produit par les oscillateurs d'émission et de réception dans le cas « bi voies » ; notamment elle ne nécessite pas que les oscillateurs de transposition en fréquence soient synchronisés en émission ou en réception. L'invention permet par ailleurs de corriger des dérives en fréquence et des instabilités de fréquence différentes sur les différents oscillateurs en présence dans la chaine de transmission.

Dans certains modes de réalisation, la présente invention permet de démoduler en aveugle un très grand débit de signal, notamment avec des ordres de modulation élevés.

• Démodulation d'un signal mono-voie

Dans certains modes de réalisation, le système de démodulation en aveugle d'un signal type mono-voie peut fonctionner selon la configuration schématique de la figure 3. Les différents modules et blocs du système de démodulation sont représentés sur la figure 3 par trois sous module réalisant les fonctions next (sous blocs (Nxx)), update (sous blocs (Uxx)) et propagate (sous blocs (Pxx)). La figure 3 représente schématiquement la suite d'opérations réalisées pour la création, le traitement d'un symbole et la mise à jour des paramètres de chaque bloc.

Dans certains modes de réalisation, le traitement d'un flux de symboles ou d'un signal se déduit de schémas de traitement d'un symbole. Dans ce cas-là, les différents blocs de traitement peuvent être parallélisés, les blocs peuvent être disposés selon un pipeline.

Le module de synchronisation ou du bloc de calcul de synchronisation du signal en aveugle (N0) possède une référence au signal capté. Il mémorise les échantillons nécessaires pour former la sortie complexe $x_0$. Les valeurs de $x_0$ sont émises au rythme symbole du signal à démoduler. On parlera donc d'un symbole. La sortie $x_0$ peut être transmise au module Filtre F qui réalise la fonction (N1) pour former une sortie $x_1$. Le complexe $x_2$ peut être obtenu par rebouclage de la sortie du bloc de décision (NL) dans un filtre G (N2). La valeur $x_2$ peut être soustraite à la valeur $x_1$ pour former une sortie complexe $x_2$ qui peut traverser le module d'amplification (N4) pour former une sortie complexe $x_4$. Cette valeur $x_4$ peut traverser alors le module fréquence (N5) pour former une sortie complexe $x_5$ qui traverse alors le module Phase (N6) pour former un complexe $y$ qui constitue la sortie d'intérêt du système et consiste en un signal démodulé.

Le symbole $y$ est mis en entrée d'un organe de décision (par exemple un « slicer »). Ce module est programmé avec la constellation de la modulation en jeu et renvoie pour tout $y$ la valeur complexe $z$ du point de la constellation le plus proche de $y$.

La différence conjuguée $e = \overline{z - y}$ est calculée et constitue la première erreur. Cette erreur va être rétro-propagée à travers les différents modules de la chaine.

Pour chaque sous module, une erreur est mise en entrée des sous-modules propagate et update. Le module propagate calcule une nouvelle erreur qu'il envoie en entrée du module suivant, le module update calcule un incrément des paramètres de traitements du module courant. Ainsi, l'erreur $e$ est mise en entrée des sous-modules (P6) et (U6) du module de phase. (P6) calcule la valeur de l'erreur $e_5$ à partir de l'erreur $e$. (U6) calcule l'incrément $\delta\varphi$ à appliquer à l'état interne $\varphi$ du module phase. L'erreur $e_5$ est mise en entrée des sous-modules (P5) et (U5) du module Fréquence. (P5) calcule l'erreur $e_4$ et (U5) calcule l'incrément $\delta f$ sur le paramètre interne $f$ du module de fréquence. Les différents états de ce module sont mis à jour en conséquence. L'erreur $e_4$ est mise en entrée des sous-modules (P4) et (U4) du module Ampli. (P4) calcule l'erreur $e_2$ et (U4) calcule l'incrément $\delta A$ sur le paramètre interne $A$ du module de Amplitude.

On calcule l'opposée de l'erreur de $e_2$, c'est à dire $e_2 = -e_2$, cette erreur est mise en entrée du sous-module (U2) qui calcul l'incrément $\delta G$ à appliquer au filtre G. L'erreur $e_2$ est dans un souci d'homogénéité renommée $e_1$, par exemple sur la figure 3, et mis en entrée des sous-modules (P1) et (U1) du module Filtre F. Le sous-modules (P1) calcule l'erreur $e_0$ et (U1) calcule l'incrément vectoriel complexe $\delta F$ sur le paramètre interne $F$ du module Filtre F.

Enfin l'erreur $e_0$ est mise en entrée du sous-module (U0) qui calcule l'incrément $\delta\tau$ à appliquer au paramètre $\tau$ du module synchroniseur. Les différents états de ce module sont mis à jour en conséquence.

Dans certains modes de réalisation, l'enchaînement des blocs de traitement, la rétropropagation de l'erreur calculée à travers les blocs « propagate » et l'incrément des différents paramètres des blocs de la chaîne via les blocs « update » peuvent être réalisés en cascade et en boucle jusqu'à avoir estimés le plus précisément possible les différents paramètres du signal.

Dans certains modes de réalisation, chaque module du bloc de calcul du réseau, par au moins un hardware ou une combinaison hardware et firmware, peut réaliser les opérations suivantes :

- **Module filtre F (1)**

∘ Paramètres d'initialisation

- $N_F$ un entier

- $\mu$ un vecteur de réels de taille $N_F$

∘ Initialisation

- $F$ = vecteur complexe de taille $N_F$
- $X$ = FIFO complexe de taille $N_F$

∘ next($x$)

- X.append(x)
- Retourner $\langle F|X \rangle$

∘ propagate($e$)

- Retourner $e{\cdot}F$

∘ update($e$)

- $\delta F = 2\mu \times \overline{(e{\cdot}X)}$ (ici $\times$ est le produit terme à terme de deux vecteurs)
- $F{+}{=}\delta F$ ou $F{=}F{+}\delta F$

- **Module filtre G (2)**

∘ Paramètres d'initialisation

- $N_G$ un entier
- $\mu$ un vecteur de réels de taille $N_G$

∘ Initialisation

- $G$ = vecteur complexe de taille $N_G$
- $X$ = FIFO complexe de taille $N_G$

∘ next($x$)

- X.append(x)
- Retourner $\langle G|X \rangle$

∘ update($e$)

- $\delta G = 2\mu \times \overline{(e{\cdot}X)}$ (ici $\times$ est le produit terme à terme de deux vecteurs)

- $G{+}{=}\delta G$

- **Module Ampli (3)**

○ Paramètres d'initialisation

- $\square a_\square$ une valeur initiale d'amplification
- $\square N_\square$ un entier
- $\square \mu_\square$ un nombre réel

○ Initialisation

- $a = {}_{a\square}$
- $X$ = FIFO complexe de taille $\square N_\square$
- $\mu = {}_{\mu\square}$

○ next($x$)

- X.push(x)
- Retourner $a \times x$

○ propagate($e$)

- Retourner $a \times e$

○ update($e$)

- Remarque : la taille de la FIFO $X$ a été choisie en cohérence avec la taille du vecteur d'erreur $e$
- $\delta a = 2\mu \mathfrak{R}((X|e))$
- $a {+}{=} \delta a$

• **Module Fréquence (4)**

○ Paramètres d'initialisation :

- $\square f_\square$ un nombre réél codant une estimation initiale de la fréquence
- $\square N_\square$ un entier
- $\square \mu_\square$ un nombre réel

○ Initialisation

- $f = {}_{f\square}$
- $\eta = e^{2\pi j f}$
- $\rho = 1.0$
- $X$ = FIFO complexe de taille $\square N_\square$
- $\mu = {}_{\mu\square}$

○ next($x$)

- $X$.append($x$)
- Retourner $x \cdot \rho$
- $\rho \times = \eta$

○ propagate($e$)

- Retourner $e \cdot \rho$

○ update($e$)

- Remarque : la taille de la FIFO *X* a été choisie en cohérence avec la taille du vecteur d'erreur

  - $\delta f = 4\pi\mu\Im(\rho \cdot (X|e))$

  - *f* += $\delta f$

  - $\eta = e^{2\pi j f}$

- **Module Phase (5)**

  ◦ Paramètres d'initialisation

  - $\Box\varphi\Box$ un réél
  - $\Box N\Box$ un entier
  - *X* = FIFO complexe de taille $\Box N\Box$
  - $\Box\mu\Box$ un nombre réel

  ◦ Initialisation

  - $\varphi = {}_{\varphi\Box}$
  - $\rho = e^{2\pi j \varphi}$
  - $\mu = {}_{\mu\Box}$

  ◦ next(*x*)

  - *X*.append(*x*)
  - Retourner $x \cdot \rho$

  ◦ propagate(*e*)

  - Retourner $e \cdot \rho$

  ◦ update(*e*)

  - Remarque : la taille de la FIFO *X* a été choisie en cohérence avec la taille du vecteur d'erreur *e*

  - $\delta\varphi = -2\mu\Im(\rho \cdot (X|e))$

  - $\varphi += \delta\varphi$

  - $\rho = e^{2\pi j \varphi}$

- **Module Décision (6)**

  ◦ Paramètres d'initialisation

  - $\Box c\Box$ une constellation complexe

  ◦ Initialisation

  - $C = {}_{c\Box}$

  ◦ next(*x*)

■ Retourner $argmin_{c \in C}|x - c|$

• <u>Démodulation d'un signal bi-voies</u>

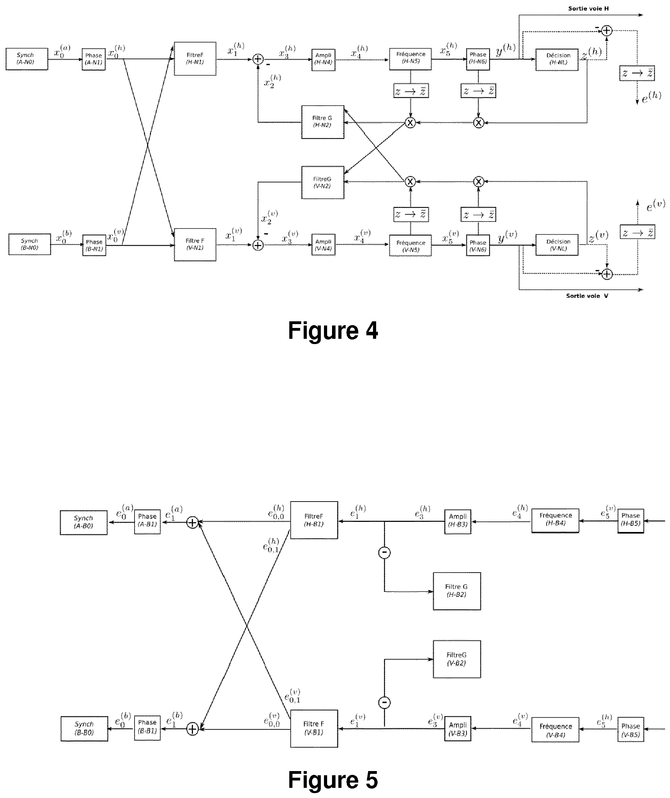

Dans certains modes de réalisation, le système de démodulation en aveugle d'un signal type multi-voies peut fonctionner selon la configuration schématique des figures 4 et 5. La figure 4 illustre l'enchaînement des blocs de traitement à partir de la réception des deux échantillons d'entrée $\left( x_0^{(a)} \; ; \; x_0^{(b)} \right)$, plus particulièrement l'enchaînement des fonction next() encapsulées (ou intégrées) dans les sous-modules (ou bloc « miroir » ou bloc résiduel) du système, notés A-Nxx et/ou H-Nxx pour la première chaîne et B-Nxx et/ou V-Nxx pour la seconde chaîne. La figure 5 illustre l'enchaînement des blocs de traitement « propagate » (ou propagation) et « update » (ou mise à jour) à partir des erreurs ($e^{(h)}$ ; $e^{(v)}$) calculées en bout des chaînes de traitement, plus particulièrement l'enchaînement des fonctions propagate() et update() encapsulées dans les sous modules notés Bxx, dont chacun regroupe les sous-modules update (Uxx) et propagate Pxx) des première (H) et seconde (V) chaînes de traitement. La première et seconde chaînes de traitement bi-voie sont semblables et peuvent être mises en parallèle (c'est-à-dire exécutées simultanément).

Les synchroniseurs ou bloc de calcul de synchronisation du signal en aveugle (A-NO) et (B-N0), en début des deux chaînes de traitement, forment les valeurs complexes $x_0^{(a)}$ et $x_0^{(b)}$. Ces valeurs peuvent être mises en entrées des modules correcteurs de Phase (A-N1) et (B-N1) qui renvoient chacun une nouvelle valeur complexe $x_1^{(a)}$ et $x_1^{(b)}$. Ces valeurs ($x_1^{(a)}$ et $x_1^{(b)}$) peuvent être mises en entrées des modules Filtres (H-N1) et (V-N1). Par exemple, comme représentées sur la figure 4, les entrées entre les deux modules (module correcteur Phase et module Filtre F) sont inversées.

Au niveau de la première chaîne ou chaîne H, le module (H-N1) forme une sortie $x_1^{(h)}$. Une différence est calculée : $x_3^{(h)} = x_1^{(h)} - x_2^{(h)}$ pour délivrer une sortie $x_3^{(h)}$. La valeur $x_2^{(h)}$ provenant de la sortie du module Filtre G (H-N2) monté en dérivation. La sortie $x_3^{(h)}$ pouvant traverser le module Amplitude (H-N4) pour délivrer une sortie $x_4^{(h)}$ qui peut être mise en entrée du module Fréquence (H-N5). Le module Fréquence peut délivrer une sortie $x_5^{(h)}$ qui peut être mis en entrée du module Phase (H-N6). Le module Phase peut délivrer une valeur (ou sortie) complexe $y^{(h)}$. Cette valeur $\left( x_1^{(h)} \right)$ constitue la sortie d'intérêt du système et correspond à la voie H démodulée.

Le symbole de sortie $y^{(h)}$ peut être mis en entrée d'un organe de décision (par exemple, un « slicer ») H-NL. Ce module est programmé avec la constellation (ou ensemble de points symboles) de la modulation en jeu et renvoie pour tout $y^{(h)}$ la valeur complexe $z^{(h)}$ du point de la constellation le plus proche de $y^{(h)}$.

Une différence conjuguée peut être calculée : $e^{(h)} = \overline{z^{(h)} - y^{(h)}}$ afin de constituer la première erreur de la chaîne H.

Par exemple, en parallèle, la valeur $z^{(h)}$ peut être envoyée dans la boucle de rétroaction contenant le filtre G (H_N2). Elle peut être multipliée successivement par le conjugué de la valeur interne P du module de phase et par le conjugué de la valeur interne $\rho$ de la fonction next () du module de fréquence pour donner une valeur $z'^{(h)}$. Les valeurs $z'^{(h)}$ et $z'^{(v)}$ constituent les entrées du sous module Filtre G (H-N2) pour pouvoir délivrer les sorties $x_2^{(h)}$ et $x_2^{(v)}$.

Les enchaînements de la chaîne H s'applique similairement à la seconde chaîne ou chaîne V (en remplaçant les exposants ($h$) par ($v$) dans les références).

Comme représentées par exemple sur la figure 5, les erreurs $e^{(h)}$ et $e^{(v)}$ constituent les entrées de la chaine de rétro-propagation de l'erreur.

De l'erreur $e^{(h)}$ à l'erreur $e_1^{(h)}$ de la chaine H et de l'erreur $e^{(v)}$ à l'erreur $e_1^{(v)}$ de la chaîne V, l'erreur suit le même trajet de rétro-propagation que dans le cas du signal mono voie décrit ci-dessus.

Les sous modules Filtre F de la chaîne H (H-B1) et de la chaîne V (V-B1) reçoivent chacun une erreur sous forme du nombre complexe $e_1^{(h)}$ ou $e_1^{(v)}$, afin de réaliser la mise à jour des différents coefficients des filtres internes et de délivrer deux vecteurs d'erreur $e_{0,0}^{(h)}$ et $e_{0,1}^{(h)}$ et $e_{0,0}^{(v)}$ et $e_{0,1}^{(v)}$ pour pouvoir obtenir les erreurs $e_1^{(a)}$ et $e_1^{(b)}$ à rétro-propager aux sous modules correcteurs Phase (A-B1 et B-B1). Ainsi, lesdits vecteurs sont donc nommés selon : $e_1^{(a)} = e_{0,0}^{(h)} + e_{0,1}^{(v)}$ et $e_1^{(b)} = e_{0,0}^{(v)} + e_{0,1}^{(h)}$ pour que ces dernières valeurs puissent être mises en entrées du sous-module (A-B1) et du sous-module (B-B1) qui peuvent réaliser la mise à jour des paramètres de phase, puis renvoyer (ou délivrer) les erreurs $e_0^{(a)}$ et $e_0^{(b)}$. Les erreurs $e_0^{(a)}$ et $e_0^{(b)}$ peuvent être utilisées pour mettre à jour les paramètres de synchronisation dans les sous-modules (A-BO) et (B-B1).

Dans certains modes de réalisation, chaque module du bloc de calcul du réseau, par au moins un hardware ou une combinaison hardware et firmware, peut réaliser les opérations suivantes :

• **Module filtre F (1)**

◦ Paramètres d'initialisation

- $N_F$ un entier

◦ Initialisation

- $F_0$ = vecteur complexe de taille $N_F$

- $F_1$ = vecteur complexe de taille $N_F$

- $X_0$ = FIFO complexe de taille $N_F$

- $X_0$ = FIFO complexe de taille $N_F$

◦ next($x_0, x_1$)

- $X_0$.append($x_0$)

- $X_1$.append($x_1$)

- Retourner ($\langle F_0 | X_0 \rangle + \langle F_1 | X_1 \rangle$)

◦ propagate($e$)

- Retourner ($e \cdot F_0, e \cdot F_1$)

◦ update($e$)

- $\delta F_0 = 2\mu \times \overline{(e \cdot X_0)}$ (ici $\times$ est le produit terme à terme de deux vecteurs)

- $F_0 += \delta F_0$

• $\delta F_1 = 2\mu \times \overline{(e \cdot X_1)}$ (ici $\times$ est le produit terme à terme de deux vecteurs)

- $F_1 \mathrel{+}= \delta F_1$

- **Module filtre G (2)**

  ◦ Paramètres d'initialisation

  - $N_G$ un entier

  ◦ Initialisation

  - $G_0$ = vecteur complexe de taille $N_G$

  - $G_1$ = vecteur complexe de taille $N_G$

  - $X_0$ = FIFO complexe de taille $N_G$

  - $X_1$ = FIFO complexe de taille $N_G$

  ◦ next($x$)

  - X.append(x)

  - Retourner ($\langle G0|X_0\rangle + \langle G_1|X_1\rangle$)

  ◦ update($e$)

  - $\delta G_0 = 2\mu \times \overline{(e \cdot X_0)}$ (ici $\times$ est le produit terme à terme de deux vecteurs)

  - $G_0 \mathrel{+}= \delta G_0$

  - $\delta G_1 = 2\mu \times \overline{(e \cdot X_1)}$ (ici $\times$ est le produit terme à terme de deux vecteurs)

  - $G_1 \mathrel{+}= \delta G_1$

Dans certains modes de réalisation, les opérations décrites pour la démodulation aveugle mono-voie peuvent être appliquées dans les modules d'amplification, de fréquence, de phase et/ou de décision.

- Synchroniseur

Comme décrit ci-dessus, le système de démodulation en aveugle de la présente invention peut comprendre un synchroniseur adaptatif (définit comme « un bloc de calcul de synchronisation d'un signal aveugle » dans la présente demande) pour une chaîne de démodulation d'un signal en modulation linéaire.

Dans certains modes de réalisation, le synchroniseur comprend :

- un premier sous module configuré, par l'intermédiaire d'au moins un processeur et un logiciel ou code exécutable, pour réaliser une fonction : nexl($\square$):ø $\rightarrow$ complex pour définir et délivrer son signal de sortie ;

- un second sous module configuré pour définir une fonction : update($w$); complex $\rightarrow$ ø par l'intermédiaire d'au moins un processeur et un logiciel ou code exécutable, pour estimer un correctif ($\delta\tau$).

La fonction « next » (terme anglais pour définir le renvoie d'un élément suivant d'un itérateur) du premier sous module, transforme les valeurs du signal d'entrée pour renvoyer à la demande le prochain échantillon. La fonction « update » (terme anglais pour « mettre à jour ») du second sous module, actualise le correctif à appliquer à l'estimation du retard de propagation du signal d'entrée à partir d'une l'estimation de l'erreur.

Dans certains modes de réalisation, le premier sous module du bloc de synchronisation comprend un générateur configuré pour extraire des valeurs d'échantillon du signal d'entrée selon le besoin. Le signal est alors vu comme un générateur d'échantillons, itérable et utilisable par le bloc de calcul de synchronisation.

Dans certains modes de réalisation, les valeurs d'échantillon extraites du signal d'entrée sont transmises dans un premier tampon, disposé dans le premier sous module du bloc de synchronisation, de sorte à mémoriser les dernières valeurs du signal. Le premier tampon peut être disposé dans le premier sous module ou dans le synchroniseur hors du premier sous module, de façon temporaire ou permanente selon l'application souhaitée.

Dans certains modes de réalisation, un second tampon est configuré pour mémoriser des variables auxiliaires utiles au calcul du correctif $(\delta\tau)$. Le second tampon peut être disposé dans le second sous module ou dans le synchroniseur hors du second sous module, de façon temporaire ou permanente selon l'application souhaitée.

Dans certains modes de réalisation, le premier et second tampon sont un tampon mémoire du type FIFO (terme anglais « First-In-First-Out » définissant une méthode pour organiser et manipuler un tampon de données, dans laquelle les premières données entrées sont traitées les premières).

Dans certains modes de réalisation, une fonction d'initialisation permet de configurer pour initialiser les paramètres du module ou bloc de synchronisation.

A l'initiation, le module ou bloc de synchronisation peut prendre les paramètres suivants :

- Les valeurs de rythme d'échantillonnage $T_{iq}$ et de rythme de symbole $T$, une de ces dernières pouvant être fixées à 1

- $h^\square$ et $h'$ sont des fonctions permettant de calculer le filtre de mise en forme du signal et sa dérivée

- Une valeur initiale de $\tau \in [0,T[$ ; par défaut $\tau = 0$

- Un paramètre réel $\mu \geq 0$ appelé vitesse d'apprentissageet a priori petit

- Un nombre entier $n$ tel que les tampons de temps décrits plus bas ont une taille $2n + 1$

- Un nombre entier $m$ tel que l'erreur $w$ est un vecteur complexe de taille $m$

Dans certains modes de réalisation, le synchroniseur peut être initialisé par au moins un processeur et au moins un logiciel ou un code exécutable aptes à réaliser les opérations d'initialisation suivantes :

- $\vec{t}$ = initialiser vecteur de réels de taille $2n + 1$
  Avec $\vec{t}[i] = (i - n) \times T_{iq} + \tau$

- $\vec{X}$ = initialiser tampon FIFO de complexes de taille $2n + 1$ à 0

- $\vec{Y'}$ = initialiser tampon FIFO de complexes de taille $m$ à 0

Dans lesquelles

∘ la valeur $T_{iq}$ est le rythme d'échantillonnage

∘ $\vec{t}$ est le vecteur date corrigée à rapporter à 0

∘ $i$ représente une variable évolutive

∘ une valeur initiale de $\tau \in [0,T[$

∘ un nombre entier $n$ tel que les tampons ont une taille $2n+1$

∘ un nombre entier m tel que l'erreur est un vecteur complexe de taille $m$

Dans certains modes de réalisation, le bloc de synchronisation peut être configuré pour réaliser les traitements suivants par l'intermédiaire d'au moins un processeur et au moins un logiciel ou un code exécutable :

- next(□): ø → complex

$\circ \vec{t} = \vec{t} + T$

$\circ$ While $\vec{t}(n) > 0$

- $x$ = input, next($\square$)

- $X$.append($x$)

- $\vec{t} = \vec{t} - T_{iq}$

$\circ y = \langle \vec{X} | \vec{h}(\vec{t}) \rangle$

$\circ y' = \langle \vec{X} | \vec{h}(\vec{t}) \rangle$

$\circ Y'$.append($y'$)

$\circ$ **Return** $y$

- update($w$):complex $\rightarrow$ ø

$$\circ \quad \delta\tau = 2\mu \cdot \Re((Y'|e))$$

$\circ \vec{t} = \vec{t} + \delta\tau$

La boucle « while » (terme anglais pour « tant que ») permet d'extraire un ensemble d'échantillons (x) du générateur input et de les intégrer dans le premier tampon mémoire. Le vecteur t contient les dates des échantillons contenus dans le buffer (X) ou tampon relativement à la date du prochain symbole émis par le bloc de synchronisation. Tant que la date de l'échantillon en milieu de buffer est positive, un nouvel échantillon est prélevé et les dates des échantillons sont mises à jour jusqu'à qu'un échantillon de date négative soit extrait. Une fois le critère vérifié (c'est-à-dire un échantillon négatif extraite), la suite des traitements pour définir le premier signal de sortie (y) peut être poursuivie.

La présente invention présente l'avantage d'utiliser un synchroniseur adaptatif (c'est-à-dire un synchroniseur comprenant un bloc de calcul de synchronisation d'un signal aveugle) en début de chaine, afin que le reste de la chaine soit cadencé au rythme réduit d'un échantillon par symbole.

Dans certains modes de réalisation, la présente invention répartit la compensation du canal de propagation sur deux filtres, un filtre « feedforward » ou « avant » noté F et un filtre « backward » ou « arrière » noté G. La combinaison de ces deux filtres permet de renforcer la capacité d'égalisation du démodulateur mais nécessite localement l'ajout de multiplicateurs et d'opérateurs de conjugaison pour assurer une robustesse optimale au bruit de phase, aux dérives en fréquences et aux instabilités en fréquence dans le cas bi-voie.

La présente invention concerne également une méthode temps réel de démodulation aveugle de signaux de télécommunication numérique, à partir de l'observation par échantillonnage d'un signal, ce signal correspond à la réception d'un signal de modulation linéaire ayant subi des déformations lors de sa transmission, le processus de traitement comprenant les étapes suivantes :

- acquisition par échantillonnage de $m_0$ signaux $(x_{0,0}, \cdots, x_{0,m_0-1})$ pour constituer chacune une entrée d'un réseau de neurones spécialisés ; chaque neurone $F_i$ étant simulé par les sorties d'une chaine amont $G_i$ et stimulant une chaine aval $H_i$ ; chaque jeu d'échantillons parcourt la même chaine de traitement ;

- pour chaque nouvel échantillon en entrée, chaque sous neurone $F_i^{(N)}$ est stimulé par les sorties de la chaine amont $G_i^{(N)}$ constituée de la mise en cascade des neurones spécialisés $F_0^{(N)}$ à $F_{i-1}^{(N)}$ et stimulant la chaine aval $H_i^{(N)}$ constituée des neurones spécialisés $F_{i+1}^{(N)}$ à $F_{L-1}^{(N)}$ ; les traitements réalisés par le sous module $F_i^{(N)}$ dépendent d'un paramètre mémorisé en interne $\theta_i$ ; les sorties du dernier neurone $F_{L-1}^{(N)}$ constituent le sorties d'intérêt du système ou encore les signaux démodulés et sont notées $y_0 \cdots y_N$ ;

- une fonction non linéaire (NL) est appliquée indépendamment à chaque signal démodulé $y_j$ pour produire les variables ($z_j$) et calculer les erreurs de bout de chaine $e_j = \overline{z_j - y_j}$ ;
- rétropropagation de l'erreur et mise à jour du paramètre $\theta_i$ ;
- un signal d'erreur traverse le réseau en sens inverse : du neurone $F_{L-1}$ au neurone $F_0$ ; l'erreur en entrée du neurone $F_{L-1}$ est le vecteur $(e_{L-1,0},\cdots,e_{L-1,N-1}) = (e_0,\cdots,e_{N-1})$ ; en traversant le neurone $j$, l'erreur est modifiée par le sous neurone $F_j^{(P)}$ avant d'être transmise au neurone $F_{j-1}$ ; parallèlement à la retroprogation de l'erreur du neurone $j$ au neurone $j$ - 1, l'erreur en provenance du neurone $j$ + 1 est mise en entrée du sous neurone $F_j^{(U)}$ qui produit un terme correctif $\delta\theta_i$ qui permet la mise à jour du paramètre interne $\theta_i$ selon $\theta_i += \delta\theta_i$.

Cette erreur calculée peut permettre de corriger la valeur courante de $\theta_i$ chaque bloc. Les sorties des derniers blocs du réseau correspondent idéalement aux symboles démodulés.

Ces signaux de télécommunication peuvent inclure des déformations comprenant notamment : un filtre de canal (et un filtre de co-canal dans le cas bi-voies), une amplification, une valeur de phase, un résidu de porteuse, du bruit et d'autres perturbations stochastiques comme du bruit de phase. Ainsi, selon l'invention, le réseau de démodulation va corriger ces différents effets à travers des neurones de traitement spécialisés. Par neurones de traitement spécialisés, on entend une ou plusieurs fonctions dont les paramètres peuvent être mise à jour par rétropropagation.

Dans certains modes de réalisation, les paramètres $\theta_i$ des différents blocs de traitement sont prédéfinis initialement, par exemple de façon arbitraire sans s'éloigner des valeurs attendues. Pour chaque échantillon entrant dans le système et pour chaque neurone i, notre système produit un terme correctif $\delta\theta_i$ qui est ajouté à la valeur courante du paramètre $\theta_i$: $\theta_i += \delta\theta_i$. Cette équation de mise à jour produit une suite de valeurs de $\theta_i$ qui convergent vers la valeur de $\theta_i$ qui permet de démoduler au mieux le signal d'entrée.

Dans certains modes de réalisation, chaque neurone $F_i$ du réseau réalise spécifiquement :

- un traitement d'une fonction « next », implémentée et mise en oeuvre dans le sous-bloc logique traitement $F_i^{(N)}$ pour générer des sorties à partir d'une pluralité d'observation et les transmettre au bloc de traitement du neurone suivant du réseau ; pour le neurone $F_i$, cette fonction s'écrit de façon générale avec ses entrées-sorties sous la forme $(X_{i+1,0},\cdots,X_{i+1,m_{i+1}-1}) = next (X_{i,0},\cdots,X_{i,m_i-1})$ avec $m_i$ le nombre d'entrées et $m_{i+1}$ le nombre de sortie de $F_i^{(N)}$ qui correspond au nombre d'entrées de $F_{i+1}^{(N)}$. Chaque traitement est paramétré par un ensemble de paramètres $\theta_i$ d'où la notation $F_i^{(N)} = F_i^{(N)}(\cdot|\theta_i)$ quand on veut rappeler l'importance du paramètrage. Chaque fonction « Next » est représentée sur les figures 3 à 5 par un bloc $N_i$ ;

- un traitement d'une fonction « Propagate », implémentée et mise en oeuvre dans le sous-bloc logique $F_i^{(P)}$ pour calculer les erreurs $(e_{i,0},\cdots,e_{i,m_i-1})$ à partir des erreurs $(e_{i+1,0},\cdots,e_{i+1,m_{i+1}-1})$ fournies par le bloc $F_{i+1}^{(P)}$ ou par $(e_{L-1,0},\cdots,e_{L-1,N-1})=(e_0,\cdots,e_{N-1})$ avec $e_j = \overline{z_j - y_j}$ en bout de chaine soit à l'entrée $F_{L-1}^{(P)}$. Cette fonction s'écrit pour le i-ème neurone : $(e_{i,0},\cdots,e_{i,m_i-1}) = propagate (e_{i+1,0},\cdots,e_{i+1,m_{i+1}-1})$. Chaque fonction« Propagate » est représentée sur les figures 3 à 5 par un bloc $P_i$ dit bloc résiduel;

- un traitement d'une fonction « Update», implémentée et mise en oeuvre dans le sous-bloc logique $F_i^{(U)}$ pour calculer le terme correctif $\delta\theta_i$ à appliquer à la valeur courante du paramètre mémorisé en interne $\theta_i$ à partir des erreurs $(e_{i+1,0},\cdots,e_{i+1,m_{i+1}-1})$ renvoyées par le sous bloc $F_{i+1}^{(P)}$. Cette fonction s'écrit de façon générale sous la forme $\theta\delta_i = update(e_{i+1,0},\cdots,e_{i+1,m_{i+1}-1})$ Chaque fonction « Update » est représentée sur les figures 3 à 5 par un bloc $U_i$ dit bloc résiduel.

Par implémenté et mise en oeuvre, on entend soit l'exécution d'un programme correspondant aux fonctions ou formules mathématiques (explicitées dans le texte), par un matériel informatique (tel qu'un microprocesseur et une mémoire) ; soit par un hardware ou une combinaison hardware et firmware.

Ainsi, comme représenté par exemple sur la figure 2, chaque neurone $F_i$ encapsule au moins deux sous-neurones logiques qui implémentent chacun au moins une des deux fonctions « update » et « next » ci-après et la fonction « propagate » qui n'est pas nécessairement implémentée par le premier bloc ($G_i$) :

- $F_i^{(N)}$ implémente $(X_{i+1,0}, \cdots, X_{i+1 m_{i+1}}-1) = \text{next}(X_{i,0}, \cdots, X_{i,m_i}-1)$

- $F_i^{(P)}$ implémente $(e_{i,0}, \cdots, e_{i,m_i}-1) = \text{propagate}(e_{i+1,0}, \cdots, e_{i+1,m_{i+1}}-1)$

- $F_i^{(U)}$ implémente $\delta\theta_i = \text{update}(e_{i,0}, \cdots, e_{i,m_{i+1}}-1)$

La figure 1, par exemple représente schématiquement l'intégration d'un « neurone spécialisé » $F_i$ à une chaine ou un ensemble de neurones amont ($G_i$) et à une chaine ou un ensemble de neurones aval ($H_i$) d'une méthode temps réel de démodulation aveugle de signaux de télécommunication numérique. Le neurone $F_i$ étant relié en entré au dernier des neurones de l'ensemble $G_i$, et en sortie au premier de l'ensemble $H_i$.

Dans certains modes de réalisation, un des blocs de traitement $F_i^{(N)}$ comprend au moins un programme implémentant et mettant en oeuvre une suite de traitements élémentaires de la forme :

- $$F_i^{(N)} \text{réalise}\left(X_{i+1,0}, \cdots, X_{i+1,m_{i+1}-1}\right) = \text{next}\left(X_{i,0}, \cdots, X_{i,m_i-1}\right), \quad X_{ij} \in K^{Q_{ij}} \text{ avec } q_{ij} \text{ un entier et } K$$
  l'espace des nombres réels ou l'espace des nombres complexes

- $$F_i^{(p)} \text{réalise}\left(e_{i,0}, \cdots, e_{i,m_i-1}\right) = \text{propagate}\left(e_{i+1,0}, \cdots, e_{i+1,m_{i+1}-1}\right)$$

- $$F_i^{(U)} \text{réalise } \delta\theta_i = \text{update}\left(e_{i+1,0}, \cdots, e_{i+1,m_{i+1}-1}\right)$$

Le traitement réalisé par le bloc $\left(F_i^{(N)}\right)$ dépend d'un paramètre $\theta_i$ qui peut être un nombre réél ou complexe, un vecteur lui-même réel ou complexe...

Dans certains modes de réalisation, la fonction « Next » implémentée dans le sous-neurone ou sous bloc $F_i^{(N)}$ est connue analytiquement et dépend d'un paramètre $\theta_i$.

Elle pourra être notée ⟦ $(X_1(i+1,0), \cdots, X_1(i+1, m_1(i+1)-1)) = F$ ⟧ $_1\text{it}((N))$ $(X_1(i, 0), \cdots, X_1(i, m_1 i - 1) \mid \theta_1 i)$ Les projections élémentaires du vecteur de sortie sur la composante $X_{i+1,j}$ pourra être notée $F_{i,j}^{(N)}$.

Dans certains modes de réalisation, comme représenté par exemple sur la figure 1, un réseau de neurones spécialisés (pouvant être agencé dans un démodulateur) pour démoduler en aveugle un signal de télécommunication en modulation linéaire, comprend dans chacun des neurones un bloc de traitement $\left(G_i^{(N)}, F_i^{(N)}, H_i^{(N)}\right)$. Le premier bloc de traitement $\left(G_i^{(N)}\right)$ reçoit deux signaux correspondant chacun à une première pluralité d'observation du signal pour générer une pluralité de sorties qui sont transmis au bloc logique $\left(F_i^{(N)}\right)$ suivant. Le bloc logique

$\left(F_i^{(N)}\right)$ intègre la pluralité de sorties pour générer à son tour une autre pluralité de sorties qui sont transmis au dernier bloc logique $\left(H_i^{(N)}\right)$ du réseau. Ce dernier bloc $\left(H_i^{(N)}\right)$ intègre à son tour la pluralité de sorties du précédent bloc logique $\left(F_i^{(N)}\right)$ pour générer également une pluralité de sorties. Un filtre de non linéarité est appliqué à la sortie du dernier bloc $\left(H_i^{(N)}\right),$ afin de calculer un signal d'erreur (e) pour pouvoir le rétro-propager de cette erreur calculée sur chacune des entrées du réseau associée à l'entrée respective du réseau.

Dans certains modes de réalisation, l'ensemble des L blocs peut exécuter une chaine de traitements de la forme, implémentée et mise en oeuvre par au moins un programme, suivante:

pour tout $0 \leq i < L$

$$(y, \cdots, y_{N-1}) = H_i^{(N)}\left(F_{i,0}^{(N)}\left(x_{i,0} \cdots x_{i,M_i-1}\big|\theta_0\right), \cdots, F_{i,N_i-1}^{(N)}\left(x_{i,0} \cdots x_{i,M_i-1}\big|\theta_{n_i-1}\right)\big|\theta_{i+1:L-1}\right)$$

avec

$$[(x]_{i,0}, \cdots, x_{i,m_i-1}) = G_i^\theta\left(x_{0,0}, \cdots, x_{0,m_0-1}\big|\theta_{0:i-1}\right) = \left(G_{i,0}^\theta\left(x_{0,0}, \cdots, x_{0,m_0-1}\big|\theta_{0:i-1}\right), \cdots, G_{i,m_i-1}^\theta\left(x_{0,0}, \cdots, x_{0,}\right.$$

Un nombre de L blocs s'enchainent pour réaliser un traitement global. L'enchainement des blocs 0 à $i$ - 1 est noté

$G_i^{(N)}\left(\cdots\big|\theta_{0:i-1}\right)$ et l'enchainement des blocs $t$ + 1 à $L$ - 1 est noté $H_i^{(N)}\left(\cdots\big|\theta_{i+1:L-1}\right).$ Les sorties du dernier bloc sont notées $y_0, \cdots, y_{N-1}$. On note $F_{i,0}^{(N)}\left(x_{i,0} \cdots x_{i,m_i-1}\big|\theta_i\right), \cdots, F_{i,n_i-1}^{(N)}\left(x_{i,0} \cdots x_{i,m_i-1}\big|\theta_i\right)$ les $n_i$ fonctions de

projections donnant $Y_{i,k} = F_{i,k}^{(N)}\left(x_{i,0} \cdots x_{i,m_i-1}\big|\theta_i\right)$ pour $0 \leq k < n_i$.

Dans certains modes de réalisation, les variables dont dépendent chaque sortie de blocs peuvent être explicitées selon la notation suivante : $y_j = y_j^\theta\left(x_{0,0} \cdots x_{0,M_0-1}\right).$ Chaque sortie de blocs peut être une valeur réelle ou complexe ou même vectorielle.

Dans certains modes de réalisation, l'ajout de la non-linéarité à la sortie du dernier bloc $\left(H_i^{(N)}\right)$ du réseau est mise en oeuvre par une fonction implémenté dans un programme qui s'écrit :

$z_j$ = NL($y_j$) dans laquelle

- $z_j$ est le signal sortant d'un organe de décision du dernier bloc
- $y_j$ est un échantillon démodulé

Dans certains modes de réalisation, la rétropropagation des erreurs calculées est obtenue par les traitements, implémentés et mise en oeuvre par un algorithme de rétropagation de l'erreur, suivants :

- Initialisation de la rétropropagation sous la forme
pour $0 \leq k <$ N, $e_{L,k} = \overline{z_k - y_k}$

- Propagation de l'erreur par le sous-neurone $F_i^{(P)}$ dans la fonction $(e_{i,0}, \cdots, e_{i,m_i}$-1) = propagate($e_{i+1,0}, \cdots, e_{i+1,m_{i+1}}$-1) selon les calculs

$$e_{i,j} = \sum_k e_{i+1,k} \cdot \frac{\partial F_{i,k}}{\partial x_{i,j}}$$

∘ $\forall 0 \le j < m_i$,

Dans certains modes de réalisation, la mise à jour des paramètres internes $\theta_i$ de chaque neurone $F_i$ est obtenue dans le sous neurone $F_i^{(U)}$ par les traitements, implémentés et mise en oeuvre dans la fonction $\delta\theta_i$ = update($e_{i+1,0}, \cdots, e_{i+1,m_{i+1}}$-1) selon :

∘ Calcul de $\Delta_i$ :

$$D_{i,j} = e_{i+1,j} \cdot \frac{\partial F_{i,j}^{(N)}}{\partial \theta_i}$$

■ Pour $0 \le j < M_{i+1}$,

$$\Delta_i = \sum_j D_{i,j}$$

■

∘ Mise à jour de $\theta_i$ :

$$\theta_i \mathrel{+}= 2\mu_i \Re(\Delta_i)$$

■ si $\theta_i$ est dans un $R$ espace vectoriel
■ $\theta_i \mathrel{+}= 2\mu\Delta_i$ si $\theta_i$ est dans un $C$ espace vecoriel

Avec

- $\mu_i$ un paramètre réel appelé « vitesse d'apprentissage »
- $\delta\theta_i$ est le paramètre correctif du paramètre $\theta_i$
- $D_{ij}$ est une quantité intermédiaire de calculs auxiliaires pouvant être mémorisées temporairement dans une mémoire ou des registres du hardware implémentant la réalisation
- les $\theta_i$ sont mémorisés temporairement.

Dans certains modes de réalisation, au fil du traitement des échantillons en entrée du système par les différents sous-neurones, les valeurs des différents $\theta_i$, pouvant être initialisées de façon arbitraire, convergent vers des valeurs rendant la démodulation effective.

Dans certains modes de réalisation, le réseau de neurones spécialisé constitue une suite de blocs MIMO (terme anglais pour « multi inputs, multi outputs »), chaque bloc (i) réalisant un traitement élémentaire paramétré par un ensemble $\theta_i$. Si tous les $\theta_i$ de la chaine sont bien réglés, la chaine procède à la démodulation effective du signal.

Dans certains mode de réalisation, les $\theta_i$ ne sont pas connus, et la chaine permet d'apprendre en ligne les valeurs pertinentes pour chaque $\theta_i$. A l'initialisation du système des $\theta_i$ sont fournis par défaut par une mémoire ou buffer. Dans les premiers instants, le système permet la convergence des $\theta_i$ vers les valeurs pertinentes ; cette phase est appelée phase de convergence ; le signal démodulé produit en sortie n'est alors pas fiable. Quand le système atteint un voisinage des paramètres $\theta_i$, on entre en phase dite de production ou de suivi. C'est à dire que les distances entre les valeurs calculées et celles mémorisées et définissant un voisinage sont inférieures à certains seuil pré mémorisés. Les sorties du démodulateur sont alors fiables et utilisable conjointement à la démodulation du signal, le système poursuit la variation des paramètres du système. Le système ne bascule pas explicitement d'un mode à l'autre, la seconde phase (ou phase de production) se place dans la continuité de la première.

Dans certains modes de réalisation, la méthode comprend en outre le stockage par au moins un tampon mémoire de la pluralité d'entrées et dans au moins un autre tampon de la pluralité de sorties de chaque neurone spécialisé du réseau. Les valeurs d'échantillon extraites de la pluralité d'entrée du signal peuvent être transmises dans un premier tampon, pouvant être associé au bloc de traitement correspondant de façon temporaire ou permanente selon l'application souhaitée, de sorte à mémoriser les états internes du signal d'entrée lors d'une phase d'initiation. Les valeurs de la pluralité de sorties peuvent être mémorisées dans un second tampon, pouvant être associé à un bloc de traitement correspondant de façon temporaire ou permanente selon l'application souhaitée, de sorte à mémoriser les états internes du signal de sortie.

Dans certains modes de réalisation, les tampons de mémoire sont du type FIFO (terme anglais « First-In-First-Out ») définissant une méthode pour organiser et manipuler un tampon de données, dans laquelle les premières données entrées sont traitées les premières). Dans la suite, un tampon mémoire FIFO peut être considéré comme un vecteur. Ainsi, dans certains modes de réalisation, les termes du vecteur peuvent aller du plus ancien (premier indice du vecteur) au plus récent (dernier indice du vecteur) élément du tampon FIFO.

Dans certains modes de réalisation, la présente invention peut être appliquée aussi bien dans un contexte aveugle que non aveugle mais parait particulièrement intéressant dans le premier contexte. En effet, cette invention permet de régler une chaine de traitement paramétrable sans connaissance a priori. L'invention est en particulier pertinente quand plusieurs paramètres sont en jeu.

Dans un certains modes de réalisation, un signal mono-voie est défini comme un signal numérique modulé linéairement et transmis par transposition de fréquence sur une largeur de bande finie. Un signal bi-voies est défini comme un couple de signaux mono-voies multiplexés sur deux polarisations orthogonales.

La méthode appliquée dans un certain schémas permet notamment de démoduler un signal mono-voie de modulation linéaire en compensant : l'amplification du signal, sa phase, son résidu de porteuse, les effets du canal de propagation. La méthode appliquée selon un autre schéma de démoduler un signal bi-voies et de séparer ses deux composantes en compensant : l'amplification des signaux, leurs phases, les résidus de porteuses, les effets du canal de propagation et les effets du co-canal de propagation (fuite d'une polarisation sur l'autre et inversement lors de la propagation du signal).

Sans perte de généralité et pour simplifier les explications dans la suite on pourra, par exemple, considérer qu'un signal mono-voie est un cas particulier de signal bi-voies.

Dans certains modes de réalisation, comme par exemple représenté sur les figures 3 à 5, les principes de calcul de la méthode de la présente invention pour déterminer le ou les filtre(s), l'amplification, les fréquences du signal et les valeurs de phase du signal, peuvent être mis en oeuvre dans un démodulateur aveugle d'un signal de type mono-voie et/ou d'un signal de type multi-voies .

Dans certains modes de réalisation, la méthode appliquée selon un autre schéma du système permet de démoduler un signal bi-voies et de séparer ses deux composantes en compensant : l'amplification des signaux, leurs phases, les résidus de porteuses, les effets du canal de propagation et les effets du co-canal de propagation (fuite d'une polarisation sur l'autre et inversement lors de la propagation du signal).

Dans certains modes de réalisation, ces différentes étapes de cette méthode sont donc réalisées continuellement de façon automatique, pour pouvoir optimiser et autoréguler les calculs ou opérations effectués par les blocs de traitement (via au moins un algorithme adapté) de la chaine de traitement. Cette méthode de démodulation en aveugle d'un signal de la présente invention, présente l'avantage d'estimer rapidement et en temps réel les différentes paramètres des signaux émis et de mettre en place une correction adapté pour chaque signal émis en la rétro-propageant dans la chaîne générique de traitement du signal. Par ailleurs, la méthode de la présent invention présente l'avantage de traiter de façon simple et efficace, les problèmes liés à l'interception de communication et de préférence pour la démodulation aveugle des signaux de télécommunication.

La présente invention concerne également un produit programme d'ordinateur implémenté sur un support mémoire, susceptible d'être mis en oeuvre au sein d'une unité de traitement informatique par un matériel informatique (tel qu'un microprocesseur et une mémoire) ; soit par un hardware ou une combinaison hardware et firmware et comprenant des instructions pour la mise en oeuvre d'une méthode selon l'une quelconque des modes de réalisation précédents.

Dans certains modes de réalisation, la présente invention propose une architecture de type réseau de neurones « spécialisés » pour traiter des problèmes d'interception de communications et plus particulièrement de démodulation aveugle de signaux télécommunication.

En effet, un signal d'entrée traverse un système présentant une architecture ci-dessus pour émuler une chaine de neurones spécialisés; chaque neurone réalise une fonction particulière paramétrée par un ensemble de valeurs. Les valeurs des réglages de chaque neurone spécialisé sont à priori inconnues. Une non linéarité est appliquée au résultat en bout de chaine permettant de calculer une « erreur ». Il est alors possible de rétropropager cette erreur dans la chaine de traitement comme cela est fait en apprentissage par réseau de neurones pour faire évoluer la valeur de chaque paramètre de chaque bloc vers une valeur plus pertinente. Ainsi, dans certains modes de réalisation, à l'initialisation du système des paramètres $\theta_i$ sont fournis par défaut par une mémoire du dispositif. Dans les premiers instants, le système permet la convergence des $\theta_i$ vers les valeurs pertinentes ; cette phase est appelé phase de convergence ; le signal démodulé produit en sortie n'est alors pas fiable. Quand le système atteint un voisinage défini des paramètres $\theta_i$, le système entre en phase dite de production ou de suivi. C'est à dire que les distances entre les valeurs calculées et celles mémorisées et définissant un voisinage sont inférieures à certains seuil pré mémorisés. Les sorties du démodulateur sont alors fiables et utilisables pour les appliquer à d'autres éléments matériels hardware ou software ou firmware permettant de finaliser la démodulation.

Par ce système une fois arrivé en mode de production ou de suivi les calculs sont moins nombreux et peuvent être exécutés en parallèles par les différents éléments matérialisant les blocs et ainsi rendant possible l'utilisation en temps réel.

La présence invention concerne en outre une utilisation dans un système de démodulation en aveugle d'un signal de télécommunication. Le système de démodulation (ou de recherche) en aveugle des caractéristiques (ou paramètres) du signal, comprend au moins une architecture hardware ou hardware et firmware implémentant un réseau de neurones spécifiques.

Dans certains modes de réalisation, un premier neurone spécialisé du réseau réalise l'estimation d'au moins un filtre permettant d'acquérir le signal en aveugle et puis un second réalise au moins un module permettant d'estimer l'amplification des signaux pour évaluer par la suite des autres caractéristiques (ou paramètres) des signaux par les autres neurones du réseau. Dans certains modes de réalisation, le module d'amplification peut être disposé dans un neurone différent du premier neurone. Un second neurone spécialisé réalise au moins un module d'estimation de fréquence pour déterminer les fréquences des signaux émis en aveugle et/ou au moins un module de phase pour déterminer les valeurs de phase desdits signaux. Dans certains modes de réalisation, le module de phase peut être disposé dans un neurone différend du second neurone. Un troisième neurone spécialisé réalise un module de décision pour calculer un signal d'erreur et de rétropropager les erreurs calculées à chacun des blocs résiduels des neurones précédents. La méthode selon l'une quelconque des modes de réalisation précédents, est appliquée pour déterminer les caractéristiques (ou paramètres) du signal émis en aveugle (par exemple, l'amplitude, la fréquence et la valeur de phase des signaux).

Dans certains modes de réalisation, la méthode de démodulation aveugle peut être appliquée dans le cas de la démodulation d'un signal mono-voie (comme représenté par exemple sur la figure 3) et/ou d'un signal multi-voies (comme représenté par exemple sur les figures 4 et 5).

Dans certains modes de réalisation, pour un signal de type multi-voies, outre la démodulation de chaque voie, la méthode permet la séparation des différentes voies en aveugle.

La présente demande décrit diverses caractéristiques techniques et avantages en référence aux figures et/ou à divers modes de réalisation. L'homme de métier comprendra que les caractéristiques techniques d'un mode de réalisation donné peuvent en fait être combinées avec des caractéristiques d'un autre mode de réalisation à moins que l'inverse ne soit explicitement mentionné ou qu'il ne soit évident que ces caractéristiques sont incompatibles ou que la combinaison ne fournisse pas une solution à au moins un des problèmes techniques mentionnés dans la présente demande. De plus, les caractéristiques techniques décrites dans un mode de réalisation donné peuvent être isolées des autres caractéristiques de ce mode à moins que l'inverse ne soit explicitement mentionné.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée de la portée demandée, et l'invention ne doit pas être limitée aux détails donnés ci-dessus.

**Revendications**

1. Système de démodulation en aveugle d'un signal de télécommunication numérique modulé linéairement et comprenant des modules permettant l'estimation, le suivi des variations temporelles et la corrections de la valeur des phases, des amplitudes, des fréquences , des décalages temporels et d'un ensemble de filtres de compensation du canal de propagation, **caractérisé en ce qu'**il comprend au moins une architecture hardware ou hardware et firmware comportant des mémoires et une ou plusieurs unités de traitement pour implémenter un réseau de blocs de calcul spécifiques connectés les uns aux autres, dont

   - un bloc de synchronisation du signal en aveugle permettant l'estimation, le suivi et la compensation du retard du signal et permettant aussi d'adapter le débit de traitement de la chaine en aval (du système de démodulation) à la cadence réduite d'un échantillon par symbole,
   - un premier bloc réalise au moins un module permettant d'estimer au moins un des paramètres des signaux observés pour évaluer par la suite les autres paramètres des signaux observés par d'autres blocs de calcul du réseau,
   - au moins un deuxième bloc de calcul spécialisé réalise un module de décision pour calculer un signal d'erreur et rétro-propager les erreurs calculées à chacun des blocs résiduels (« propagate », « update ») précédents.

2. Système de démodulation, selon la revendication 1, **caractérisé en ce que** le paramètre du premier bloc est le taux d'amplification, et le système comporte un bloc additionnel spécialisé relié aux sorties du premier et aux entrées du bloc de décision, ce bloc additionnel réalisant au moins un module d'estimation de fréquence pour déterminer les fréquences des signaux émis en aveugle et/ou au moins un module de phase pour déterminer les valeurs de phase desdits signaux.

3. Système de démodulation, selon la revendication 2, **caractérisé en ce que** le module de phase peut être disposé dans un bloc de calcul additionnel relié aux sorties du bloc de calcul de fréquence du bloc additionnel.

4. Système de démodulation selon la revendication 1 à 3, **caractérisé en ce qu'**il comprend un bloc supplémentaire spécialisé du réseau entre le bloc de synchronisation et le premier bloc de calcul, ledit bloc supplémentaire réalise l'estimation d'au moins un filtre permettant de corriger tout ou partie de la distorsion induite par le canal de propagation.

5. Système de démodulation selon l'une des revendications 1 à 4, **caractérisé en ce que** le module du bloc de synchronisation, est configuré pour recevoir en entrée un flux de signal complexe échantillonné à au moins deux échantillons par symboles et stocker ces échantillons dans un tampon mémoire interne pour délivrer à chaque temps symbole une sortie de signal d'entrée au bloc aval du réseau.

6. Système de démodulation selon la revendication 4 ou 5, **caractérisé en ce qu'**au moins un module de filtre (F ou G) du bloc supplémentaire est initialisé par les opérations d'initialisation suivantes :

   - $F$ = vecteur complexe de taille $N_F$
   - $X$ = FIFO complexe de taille $N_F$

   dans lesquelles les paramètres d'initialisation, mémorisé dans une mémoire du module de filtre, sont:

   ○ $N_F$ est un entier
   ○ $\mu$ un vecteur de réels de taille $N_F$.

7. Système de démodulation selon l'une des revendications 2 à 6, **caractérisé en ce qu'**au moins un module d'amplification du premier bloc est initialisé par les opérations d'initialisation suivantes :

   - $a$ = _a_
   - $X$ = FIFO complexe de taille _N_
   - $\mu$ = _μ_

   dans lesquelles les paramètres d'initialisation, mémorisé dans une mémoire du module du premier bloc, sont :

   ○ _a_ est une valeur initiale d'amplification
   ○ _N_ est un entier
   ○ _μ_ est un nombre réel.

8. Système de démodulation selon l'une des revendications 2 à 7, caractérisé en ce le module d'estimation de la fréquence du bloc additionnel est initialisé par les opérations d'initialisation suivantes :

   - $f$ = _f_
   - $\eta = e^{2\pi j f}$
   - $\rho$ = 1.0
   - $X$ = FIFO complexe de taille _N_
   - $\mu$ = _μ_

   dans lesquelles les paramètres d'initialisation, mémorisé dans une mémoire du module du bloc additionnel, sont :

   ○ _f_ est un nombre réel codant une estimation initiale de la fréquence
   ○ _N_ est un entier
   ○ _μ_ est un nombre réel.

9. Système de démodulation selon l'une des revendications 2 à 8, **caractérisé en ce que** le module d'estimation de la valeur phase du bloc additionnel est initialisé par les opérations d'initialisation suivantes :

- $\varphi = \_\varphi\_$
- $\rho = e^{2\pi j \varphi}$
- $\mu = \_\mu\_$

dans lesquelles les paramètres d'initialisation, mémorisé dans une mémoire du module du bloc additionnel, sont :

- $\_\varphi\_$ est un réél
- $\_N\_$ est un entier
- $X$ = FIFO complexe de taille $\_N\_$
- $\_\mu\_$ est un nombre réel.

**10.** Système de démodulation selon l'une des revendications 1 à 9, **caractérisé en ce qu'**à l'initialisation du système des paramètres $\theta_i$ sont fournis par défaut par une mémoire du système, permettant dans les premiers instants, appelés phase de convergence, la convergence des $\theta_i$ vers les valeurs pertinentes ; puis lorsque le système atteint un voisinage défini des paramètres $\theta_i$, le système entre en phase dite de production ou de suivi, les sorties du système démodulateur sont alors fiables et utilisables pour les appliquer à un appareil d'utilisation ou à d'autres éléments matériels hardware ou software ou firmware permettant de finaliser la démodulation.

**11.** Système de démodulation en aveugle d'un signal de télécommunication numérique multi-voie, selon l'une des revendications 2 à 10, **caractérisé en ce que** chacun des blocs de traitement (N1 ; H-N1 ; V-N1) d'au moins une des deux voies reçoit chacun des deux signaux d'entrée synchronisés $\left( x_1^{(h)} ; x_1^{(v)} \right)$ ; issus du bloc de synchronisation, les signaux $x_3^{(h)}$ et $x_3^{(v)}$ étant représentatifs d'une correction appliquée à chaque signal xo par les signaux de sortie respectifs $x_2^{(h)}$ et $x_2^{(v)}$, de chacun des filtres G de chaque voie, émulés chacun par un bloc de traitement (H-N2 ; V-N2), les signaux $x_3^{(h)}$ et $x_3^{(v)}$ sont envoyés sur les cascades en série des blocs de traitement (H-N4 ; V-N4), (H-N5 ; V-N5) et (H-N6 ; V-N6) de chaque voie, émulant chacun le signal indiquant l'amplification de la voie (ampli), pour le bloc (H-N4 ; V-N4), respectivement la fréquence (fq) de la voie pour le bloc (H-N5 ; V-N5) et respectivement la phase (φ) de la voie pour le bloc (H-N6 ; V-N6).

**12.** Système de démodulation ou de recherche en aveugle des paramètres de signaux de télécommunication numérique multi-voie, selon la revendication 11, **caractérisé en ce que** chaque sortie respective $y^h$, $y^v$ de chaque bloc de traitement (H-N6 ; V-N6) émulant la correction de phase de chaque voie H et V, est envoyée sur chaque bloc de décision (H-NL ; V-NL) de chaque voie et sur chacune des entrées respectives du circuit de rétropropagation d'au moins deux erreurs ($e^h$ et $e^v$) à travers les blocs « miroirs » qui permettent le calcul à la volée des incréments des différents paramètres des blocs de la chaine le système comprenant plusieurs modules de traitements d'une pluralité d'observation de chaque signal d'entrée ($x_i$), chacun associé à un bloc miroir ou résiduel « Update » pour chaque paramètre phase, fréquence, ampli et un bloc miroir ou résiduel « Propagate » correspondant pour chaque paramètre phase, fréquence et amplification.

**13.** Système de démodulation ou de recherche en aveugle des paramètres de signaux de télécommunication numérique multi-voie, selon la revendication 11 ou 12, **caractérisé en ce que** la sortie $Z^h$, $Z^v$ de chaque bloc décision, est également envoyée à une paire de multiplieur, recevant respectivement, l'un du bloc phase et l'autre du bloc fréquence fq ; la sortie du dernier multiplieur de chaque voie est envoyée sur chacun des filtres G de chaque voie, émulés chacun par un bloc de traitement de chaque voie.

**14.** Méthode temps réel de séparation et de démodulation aveugle de signaux de télécommunication numérique, à partir de l'observation d'une version échantillonnée de ce signal et comprenant des paramètres notamment les coefficients d'égalisation, la valeur de la phase (φ), l'amplitude du signal, leur fréquence et leur temps symbole, cette méthode comprenant les étapes suivantes :

- acquisition par un échantillonnage d'une première pluralité du signal pour constituer chacune une entrée d'un réseau de L blocs de traitement ($G_i$, $F_i$, $H_i$) aussi appelés ici « neurones spécialisés », chaque neurone étant simulé par les sorties du bloc précédent, la première pluralité du signal étant soumise en entrée au premier bloc simulant un premier neurone du réseau pour générer une pluralité de sorties du premier bloc; chaque

neurone $F_i$ étant simulé par les sorties d'une chaine amont $G_i$ et stimulant une chaine aval $H_i$ ; chaque jeu d'échantillons parcourt la même chaine de traitement ;
- les sorties des derniers blocs du réseau correspondent idéalement aux symboles démodulés ;
- ajout d'une non linéarité à chacune des sorties du dernier bloc du réseau permettant de calculer un signal d'erreur et propagation de cette erreur dans le sens inverse de la chaine de traitement (« retropropagation ») ;
- estimation à réception par chaque neurone (i) de l'erreur d'un terme correctif $\delta\theta_i$ et mise à jour dans chaque bloc de la valeur du paramètre $\theta_i$ selon $\theta_i += \delta\theta_i$.

**15.** Méthode selon la revendication 14, **caractérisée en ce que** chaque neurone ($F_i$) du réseau réalise spécifiquement :

- un traitement d'une fonction « Next » , implémentée et mise en oeuvre dans un sous bloc logique de traitement $\left(F_i^{(N)}\right),$ pour générer des sorties à partir d'une pluralité d'observation du signal et les transmettre au bloc de traitement du neurone suivant du réseau ; cette fonction s'écrit de façon générale sous la forme $(X_{i+1,0},\cdots,X_{i+1,m_i+1-1}) = \text{next}(X_{i,0},\cdots,X_{i,m_i-1})$ avec $m_i$ le nombre d'entrées et $m_{i+1}$ le nombre de sortie de $F_i^{(N)}$ qui correspond au nombre d'entrées de $F_{i+1}^{(N)}$ ;
- un traitement d'une fonction « Propagate », implémentée et mise en oeuvre dans un sous bloc logique « Propagate» $\left(F_i^{(P)}\right)$ pour calculer les erreurs $(e_{i+1,0},\cdots,e_{i+1,m_i+1-1})$ fournies par le bloc $F_{i+1}^{(P)}$ ou par $(e_{L-1,0},\cdots,e_{L-1,N-1}) = (e_0,\cdots,e_{N-1})$ avec $e_j = \overline{z_j - y_j}$ en bout de chaine soit à l'entrée $F_{L-1}^{(P)}$, pour le i-ème neurone, cette fonction s'écrit de façon générale sous la forme $(e_{i,0},\cdots, e_{i,mi-1}) = \text{propagate}(e_{i+1,0},\cdots,e_{i+1,m_i+1-1})$
- un traitement d'une fonction « Update » , implémentée et mise en oeuvre dans un sous bloc logique « Update » $\left(F_i^{(U)}\right),$ pour calculer les paramètres correctif $\delta\theta_i$ à appliquer à la valeur courante du paramètre mémorisé en interne $\theta_i$ à partir des erreurs $(e_{i+1,0},\cdots,e_{i+1,m_i+1-1})$ renvoyées par le sous bloc $F_{i+1}^{(P)}$, cette fonction s'écrit de façon générale sous la forme $\delta\theta_i = \text{update}(e_{i+1,0},\cdots,e_{i+1,m_i+1-1})$.

**16.** Méthode selon la revendication 15, **caractérisée en ce que** chaque neurone ($F_i$) comprend au moins une implémentation et une mise en oeuvre d'une suite de traitements élémentaires de la forme :
- le sous bloc $F_i^{(N)}$ réalise $(X_{i+1,0}, \cdots,X_{i+1,m_i+1-1}) = \text{next}(X_{i,0},\cdots,X_{i,m_i-1})$, $X_{ij} \in K^{q_{ij}}$ avec $q_{ij}$ un entier et K l'espace des nombres réels ou l'espace des nombres complexes
- le SOUS bloc $F_i^{(p)}$ réalise $(e_{i,0},\cdots,e_{i,m_i-1}) = \text{propagate}(e_{i+1,0},\cdots,e_{i+,m_i+1-1})$
- le SOUS bloc $F_i^{(U)}$ réalise $\delta\theta_i = \text{update}(e_{i+1,0},\cdots,e_{i+1,m_i+1-1})$

**17.** Méthode selon l'une des revendications 14 à 16, **caractérisée en ce que** l'ajout de la non-linéarité à la sortie du dernier bloc $\left(H_i^{(N)}\right)$ du réseau est mise en oeuvre par la fonction :

$$z_j = \text{NL}\left(y_j\right)$$

dans laquelle

- $z_j$ est le signal sortant d'un organe de décision du dernier bloc
- $y_j$ est un échantillon égalisé ou démodulé
- le bloc de décision étant défini par la comparaison du résultat obtenu par la sortie y du bloc phase avec une constellation finie de résultats possibles mémorisés par le bloc de décision, et décidant de prendre parmi les résultats possibles, celui dont la distance avec le point représentatif de la sortie y est la plus petite

**18.** Méthode selon la revendication 14 à 17, **caractérisée en ce que** la rétropropagation des erreurs calculées est obtenue par les traitements, implémentés et mise en oeuvre par un algorithme de rétropropagation de l'erreur, suivants :

- Initialisation de la rétropropagation sous la forme
pour $0 \le k < N$, $e_{L,k} = \overline{z_k\text{-}y_k}$

- Propagation de l'erreur par le sous- neurone $F_i^{(P)}$ dans la fonction $(e_{i,0},\cdots,e_{i,m_i\text{-}1})$ = propagate$(e_{i+1,0},\cdots,e_{i+1,m_i+1\text{-}1})$ selon les calculs

$$\forall 0 \le j < m_i,\ e_{i,j} = \sum_k e_{i+1,k} \cdot \frac{\partial F_{i,k}}{\partial x_{i,j}}$$

$\circ$

**19.** Méthode selon la revendication 18, **caractérisée en ce que** la mise à jour des paramètres internes $\theta_i$ de chaque neurone $F_i$ est obtenue dans le sous neurone $F_i^{(U)}$ par les traitements, implémentés et mise en oeuvre dans la fonction $\delta\theta_i$ = update$(e_{i+1,0},\cdots,e_{i+1,m_i+1\text{-}1})$ selon :

$\circ$ Calcul de $\Delta_i$ :

$$0 \le j < M_{i+1},\ D_{i,j} = e_{i+1,j} \cdot \frac{\partial F_{i,j}^{(N)}}{\partial \theta_i}$$

- Pour
- $\Delta_i = \sum_j D_{i,j}$

$\circ$ Mise à jour de $\theta_i$ :

- $\theta_i += 2\mu\Re(\Delta_i)$ si $\theta_i$ est dansun **R** espace vectoriel
- $\theta_i += 2\mu\Delta_i$ si $\theta_i$ est dans un **C** espace vecoriel Avec - $\mu_i$ un paramètre réel appelé « vitesse d'apprentissage »

  - $\delta\theta_i$ est le paramètre correctif du paramètre $\theta_i$
  - $D_{ij}$ est une quantité intermédiaire de calculs auxiliaires pouvant être mémorisées temporairement.

**20.** Méthode selon l'une quelconque des revendications 15 à 19, **caractérisée en ce qu'**au fil du traitement des échantillons en entrée du système par les différents sous-blocs, les valeurs des différents $\theta_i$ initialisées de façon arbitraire, convergent vers des valeurs rendant la démodulation effective.

**21.** Méthode selon l'une quelconque des revendications 14 à 20, **caractérisée en ce que** le réseau de neurones spécialisé constitue une suite compatible de blocs de type MIMO (« multi inputs, multi outputs »).

**22.** Méthode selon l'une des revendications 14 à 21, **caractérisée en ce qu'**elle comprend en outre le stockage par au moins un tampon mémoire de la pluralité d'entrée et dans au moins un autre tampon de la pluralité de sorties de chaque neurone spécialisé du réseau.

**23.** Produit programme d'ordinateur implémenté sur un support mémoire, susceptible d'être mis en oeuvre au sein d'une unité de traitement informatique et comprenant des instructions pour la mise en oeuvre d'une méthode selon l'une quelconque des revendications précédentes.

**24.** Produit pour la mise en oeuvre d'une méthode selon l'une quelconque des revendications précédentes **caractérisé en ce qu'**il comprend du hardware ou une combinaison hardware firmware, et comprenant des instructions codées pour mettre en oeuvre la méthode.

**25.** Utilisation dans un système de démodulation en aveugle d'un signal de télécommunication, le système comprenant au moins un réseau de neurones spécialisés chacun définissant respectivement un filtrage par un premier neurone spécialisé, un gain d'amplification par un second neurone spécialisé, une correction de la fréquence du signal par un troisième neurone spécialisé et une correction de la valeur de phase du signal par un quatrième neurone spécialisé ; **caractérisé en ce que** la méthode selon l'une quelconque des revendications 14 à 22 est mise en oeuvre pour déterminer les caractéristiques du signal émis en aveugle.

**Figure 1**

**Figure 2a**

$$F_i(\cdot|\theta_i)$$

**Figure 2b**

**Figure 3**

EP 3 506 173 A1

Figure 4

Figure 5

Europäisches
Patentamt

European
Patent Office

Office européen
des brevets

# RAPPORT DE RECHERCHE EUROPEENNE

Numéro de la demande

EP 18 30 6866

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | TREICHLER J R ET AL: "Practical implementations of blind demodulators", SIGNALS, SYSTEMS & COMPUTERS, 1997. CONFERENCE RECORD OF THE THIRTY-FI RST ASILOMAR CONFERENCE ON PACIFIC GROVE, CA, USA 2-5 NOV. 1997, LOS ALAMITOS, CA, USA,IEEE COMPUT. SOC, US, 2 novembre 1997 (1997-11-02), page 1028, XP032140332, DOI: 10.1109/ACSSC.1997.679062 ISBN: 978-0-8186-8316-9 | 1-14, 21-25 | INV. G06N3/04 H04L25/03 H04L27/00 H04L27/233 |
| A | * abrégé * * Sections "Reassessment of the demodulator design" and "Choice of alogorithms"; page 1029 * * Section "Resulting architecture and step-by-step examples of blind acquisition"; page 1030 * ----- | 15-20 | |
| X | JOHN R TREICHLER ET AL: "Practical Blind Demodulators for High-Order QAM Signals", PROCEEDINGS OF THE IEEE, IEEE. NEW YORK, US, vol. 86, no. 10, 1 octobre 1998 (1998-10-01), XP011044107, ISSN: 0018-9219 | 1-14, 21-25 | DOMAINES TECHNIQUES RECHERCHES (IPC) H04L G06N |
| A | * abrégé * * Section "Classical Design"; page 1909, colonne de gauche - page 1910, colonne de gauche, alinéa first * ----- | 15-20 | |
| A,D | FR 3 030 964 A1 (AMESYS [FR]) 24 juin 2016 (2016-06-24) * page 8, ligne 24 - page 9, ligne 13 * ----- | 1-25 | |

-/--

Le présent rapport a été établi pour toutes les revendications

| Lieu de la recherche | Date d'achèvement de la recherche | Examinateur |
|---|---|---|
| Munich | 25 mars 2019 | Ricciardi, Maurizio |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

Europäisches
Patentamt

European
Patent Office

Office européen
des brevets

**RAPPORT DE RECHERCHE EUROPEENNE**

Numéro de la demande

EP 18 30 6866

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 2013/216005 A1 (CHAUDHARY SARTAJ [IN] ET AL) 22 août 2013 (2013-08-22) * abrégé; figure 2 * * alinéa [0003] * * alinéa [0060] - alinéa [0075] * ----- | 1-25 | |
| A | EP 0 372 613 A1 (PHILIPS ELECTRONIQUE LAB [FR]; PHILIPS NV [NL]) 13 juin 1990 (1990-06-13) * abrégé * * page 2, ligne 1 - page 3, ligne 17 * ----- | 1-25 | |

**DOMAINES TECHNIQUES
RECHERCHES (IPC)**

Le présent rapport a été établi pour toutes les revendications

| Lieu de la recherche | Date d'achèvement de la recherche | Examinateur |
|---|---|---|
| Munich | 25 mars 2019 | Ricciardi, Maurizio |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 18 30 6866

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

25-03-2019

| Document brevet cité au rapport de recherche | | Date de publication | Membre(s) de la famille de brevet(s) | | Date de publication |
|---|---|---|---|---|---|
| FR 3030964 | A1 | 24-06-2016 | CN | 107534622 A | 02-01-2018 |
| | | | EP | 3235201 A1 | 25-10-2017 |
| | | | ES | 2697904 T3 | 29-01-2019 |
| | | | FR | 3030964 A1 | 24-06-2016 |
| | | | KR | 20180032522 A | 30-03-2018 |
| | | | SG | 11201705371W A | 30-08-2017 |
| | | | WO | 2016097528 A1 | 23-06-2016 |
| US 2013216005 | A1 | 22-08-2013 | AUCUN | | |
| EP 0372613 | A1 | 13-06-1990 | DE | 68925625 D1 | 21-03-1996 |
| | | | EP | 0372613 A1 | 13-06-1990 |
| | | | FR | 2639736 A1 | 01-06-1990 |
| | | | JP | H02193251 A | 30-07-1990 |
| | | | US | 5517598 A | 14-05-1996 |

EPO FORM P0460

Pour tout renseignement concernant cette annexe : voir Journal Officiel de l'Office européen des brevets, No.12/82

**RÉFÉRENCES CITÉES DANS LA DESCRIPTION**

**Documents brevets cités dans la description**

- FR 3030964
- FR 1701417
- FR 1701418
- FR 1701419

**Littérature non-brevet citée dans la description**

- Méthodes approchées de maximum de vraisemblances pour la classification et identification aveugles en communications numériques. **S. BAREMBRUCH.** rapport de thèse. Telecom ParisTech, 07 Mars 2011
- Sequential Monte Carlo methods for digital communications. **E. PUNSKAYA.** rapport de thèse. université de Cambridge, 2003